# EUROPÄISCHE PATENTSCHRIFT

(11) **EP 2 799 210 B1**
(45) Veröffentlichungstag und Bekanntmachung des Hinweises auf die Patenterteilung: **30.11.2016**
(21) Anmeldenummer: 14173929.2
(22) Anmeldetag: 06.07.2012
(51) Int. Cl.: B29C 49/64, B29C 49/78, B29C 49/68

(54) **Heizeinrichtung und Heizverfahren für Blasmaschine sowie Blasmaschine**
Heating device and heating method for blow moulding machine and blow moulding machine
Dispositif de chauffage et procédé de chauffage pour souffleuse ainsi que souffleuse

(30) Priorität: 22.08.2011 DE 102011052899; 05.07.2012 EP 12175060
(43) Veröffentlichungstag der Anmeldung: 05.11.2014
(62) Teilanmeldung aus: 12175321.4
(73) Patentinhaber: Krones AG, 93073 Neutraubling (DE)
(72) Erfinder: Schönberger, Wolfgang, 93073 Neutraubling (DE); Winzinger, Frank, 93073 Neutraubling (DE); Wutz, Andreas, 93073 Neutraubling (DE); Holzer, Christian, 93073 Neutraubling (DE)
(74) Vertreter: Schuhbießer, Irmgard Gertrud

(56) Entgegenhaltungen:
- DE-A1-102009 047 541
- DE-A1-102009 057 021
- DE-U1- 20 311 657

## Beschreibung

Die Erfindung bezieht sich auf eine Heizeinrichtung und ein Heizverfahren für eine Blasmaschine sowie eine Blasmaschine.

Blasmaschinen, oder auch Streckblasmaschinen, zur Herstellung von Behältern finden insbesondere in der Getränkeindustrie Verwendung. Behälter sind insbesondere Flaschen, die aus Vorformlingen (Preform) aus Kunststoff hergestellt werden. Hierzu werden bei solchen Blasmaschinen die Vorformlinge zunächst in einer Heizeinrichtung auf eine Temperatur erwärmt, bei der sie verformbar sind, die sogenannte Umformtemperatur. Anschließend werden die erwärmten Vorformlinge in einer Blaseinrichtung mittels Einblasen eines gasförmigen Mediums in die Form des gewünschten fertigen Behälters gebracht. Bei Streckblasmaschinen werden die Behälter zudem mit einer Reckstange gereckt.

In der Heizeinrichtung werden die Vorformlinge auf einer Förderstrecke entlang von Heizmodulen gefördert. Hierbei werden die Vorformlinge an ihrer Mündung von einer Spindel gehalten, die drehbar in einem Kettenglied gelagert ist. Zudem sind mehrere Kettenglieder, mit den darin gelagerten Spindeln, miteinander verbunden, so dass die Kettenglieder eine endlos umlaufende Kette und damit die Förderstrecke bilden.

Die Heizmodule sind außen neben der Förderstrecke angeordnet und führen den Vorformlingen mittels Infrarotstrahlung (IR-Strahlung) Wärme zu. Zusätzlich wird die Infrarotstrahlung von Reflektoren reflektiert, die innen neben der Förderstrecke und unter der Förderstrecke bzw. unter dem Boden der Vorformlinge angeordnet sind. Auf diese Weise kann die Infrarotstrahlung effektiv für die Erwärmung der Vorformlinge genutzt werden.

Bei derzeitigen Heizeinrichtungen wird eine universale Einstellung der Heizmodule gewählt, mit der ein Großteil der mit der Heizeinrichtung zu erwärmenden Vorformlinge bearbeitet werden kann. Sollen mit der Blasmaschine Behälter mit verschiedenen Behältergrößen, beispielsweise Flaschen mit einem Fassungsvermögen von maximal 0,5 Liter, 1,0 Liter oder 1, 5 Liter, hergestellt werden, sind mit der Heizeinrichtung auch verschieden große Vorformlinge zu erwärmen. Bei einer universalen Einstellung der Heizmodule für die unterschiedlich großen Vorformlinge wird somit für alle unterschiedlich großen Vorformlinge die gleiche Energiemenge zum Erwärmen verbraucht. Somit haben derzeitige Heizeinrichtungen vor allem bei der Erwärmung von kürzeren Vorformlingen einen schlechteren Wirkungsgrad als bei der Erwärmung von längeren Vorformlingen. Zumindest der Wirkungsgrad bei der Erwärmung von kürzeren Vorformlingen ist daher nicht optimal.

DE 60 2005 003 970 T2 offenbart ein Verfahren und eine Vorrichtung zum Erwärmen von thermoplastischen Vorformlingen, bei welchem zwei Halterungen jeweils entweder zum Halten einer Wärmequelle zum Erwärmen der Vorformlinge oder eines Reflektors zur Reflexion von Wärmestrahlung der Wärmequelle genutzt werden können. Die Wahl, ob an einer der zwei Halteeinrichtungen eine Wärmequelle oder Reflektor zu halten ist, wird von Fall zu Fall von einem Benutzer getroffen, der dabei die Größe eines mit der Vorrichtung zu erwärmenden Vorformlings berücksichtigt. Der einstellbare Abstand zwischen Vorformling und Reflektor ist gegebenenfalls für die Erwärmung des Vorformlings nicht optimal, da die Halteeinrichtungen nur an vorbestimmten Stellen vorhanden sind. Zudem ist eine Umrüstzeit zum Umrüsten der Vorrichtung von der Erwärmung eines längeren Vorformlings auf einen kürzeren Vorformling oder umgekehrt nicht vernachlässigbar kurz.

Unter Umweltschutzaspekten ist ein nicht optimierter Wirkungsgrad von Maschinen unvertretbar. Zudem ergeben sich für den Betreiber einer Heizeinrichtung bzw. einer Blasmaschine durch ständig steigende Energiepreise immer höhere Betriebskosten, deren Senkung wünschenswert ist.

DE 10 2009 057021 A1 zeigt einen Linearofen bei welchem Heizstrahlung von Heizstrahlern mit Hilfe eines gegenüber den Heizstrahlern angeordneten Seitenreflektors und eines Reflektors reflektiert wird, welcher einem Boden gegenüberliegt.

DE 10 2009 047541 A1 zeigt einen Ofen vom Rundläufertyp, bei welchem ein Bodenreflektor mit einer Verstelleinrichtung in der Höhe verstellbar ist.

DE 203 11 657 U1 zeigt eine Vorrichtung zum Erwärmen von Vorformlingen aus thermoplastischem Kunststoff.

Es ist daher Aufgabe der vorliegenden Erfindung, eine verbesserte Heizeinrichtung und ein verbessertes Heizverfahren zum Heizen von Vorformlingen für eine Blasmaschine sowie eine verbesserte Blasmaschine zu schaffen, bei welchen insbesondere der Aufheizprozess der Vorformlinge in der Heizeinrichtung noch effizienter realisiert wird und dadurch sowohl deren Wirkungsgrad verbessert ist als auch die Betriebskosten vermindert sind. Darüber hinaus soll möglichst gleichzeitig noch die Umrüstzeit zum Umrüsten der Heizeinrichtung zwischen der Erwärmung unterschiedlicher Vorformlinge verkürzt werden.

Diese Aufgabe wird durch eine Heizeinrichtung für eine Blasmaschine nach Patentanspruch 1 gelöst.

Unter einem Heizelement ist u.a. ein Heizstrahler, beispielsweise ein IR-Strahler zu verstehen. Weiterhin kann damit auch die Abstrahlung von Mikrowellenstrahlung oder Laserstrahlung gemeint sein.

Durch die Einstellung der Heizeinrichtung gemäß Anspruch 1, insbesondere auf einen von der Heizeinrichtung zu heizenden Vorformling, kann eine optimale Reflexion der verwendeten Wärmestrahlung bzw. Heizstrahlung in Richtung auf die jeweils zu heizenden Vorformlinge realisiert werden. Dadurch wird der Aufheizprozess der Vorformlinge in der Heizeinrichtung effizienter. Aufgrund dessen werden unnötige Energieverluste beim Aufheizen der Vorformlinge vermieden. Als Folge davon steigt der Wirkungsgrad der Heizeinrichtung. Zudem können die Betriebskosten zum Betrieb der Heizeinrichtung deutlich gesenkt werden.

Zudem ist durch die zuvor beschriebene Heizeinrichtung die Umrüstzeit zum Umrüsten zwischen der Einstellung zur Produktion einer vorbestimmten Behältergröße und der Einstellung zur Produktion einer anderen vorbestimmten Behältergröße vermindert.

Vorteilhafte weitere Ausgestaltungen der Heizeinrichtung sind in den abhängigen Patentansprüchen angegeben.

Die Heizeinrichtung kann zudem einen Rückenreflektor aufweisen, welcher auf der Seite des Heizelements angeordnet ist, zur Reflexion von von nicht von den Vorformlingen aufgenommener Heizstrahlung wieder zum Vorformling und/oder den davor und dahinter angeordneten Vorformlingen, wobei der Gegenreflektor und/oder der Rückenreflektor relativ zum Bodenreflektor und/oder zum Vorformling bewegbar sind/ist.

Es ist möglich, dass der Bodenreflektor in den Gegenreflektor und/oder den Rückenreflektor einfahrbar ist, welcher auf der Seite des Heizelements angeordnet ist, oder wobei der Gegenreflektor flexibel ausgestaltet ist.

Die Einstelleinrichtung kann zur stufenlosen Einstellung und/oder Feineinstellung des Bodenreflektors ausgestaltet sein und/oder der Gegenreflektor und/oder der Rückenreflektor können mit einer Antriebseinrichtung stufenlos verstellbar sein.

Vorzugsweise umfasst die Heizeinrichtung eine Bestimmungseinrichtung zur Bestimmung einer vorbestimmten Stellung des Bodenreflektors in Abhängigkeit von der Länge eines von der Heizeinrichtung zu heizenden Vorformlings, wobei die Einstelleinrichtung zur Einstellung der Stellung des Bodenreflektors in Abhängigkeit von der Bestimmung der Bestimmungseinrichtung ausgestaltet ist.

Die Bestimmungseinrichtung kann zudem eine Speichereinrichtung, in welcher eine vorbestimmte Stellung des Bodenreflektors in Abhängigkeit von der Länge eines von der Heizeinrichtung zu heizenden Vorformlings gespeichert ist, und/oder eine Bodenreflektor-Erfassungseinrichtung zur Erfassung der Stellung des Bodenreflektors und/oder eine Vorförrnlinglänge-Erfassungseinrichtung zur Erfassung der Länge der in der Heizeinrichtung vorhandenen Vorformlinge umfassen.

Es ist möglich, dass die Bodenreflektor-Erfassungseinrichtung und/oder die Vorformlinglänge-Erfassungseinrichtung, in Transportrichtung der Vorformlinge gesehen, am Einlauf der Heizeinrichtung angeordnet sind/ist. Alternativ kann die Vorformlinglänge-Erfassungseinrichtung auch bereits vor der Heizeinrichtung, vorteilhaft im Preformzulauf bzw. besonders vorteilhaft im Sägezahnstern angeordnet sein.

Es besteht zudem die Möglichkeit, dass die Heizeinrichtung eine Vielzahl von Heizelementen, die jeweils benachbart zueinander und in Richtung der Länge der Vorformlinge nebeneinander angeordnet sind, zur Abstrahlung von Heizstrahlung zum Heizen der Vorformlinge umfasst. Die Anzahl der Vielzahl von Heizelementen, welche zum Heizen der Vorformlinge verwendet werden, ist mittels einer Steuereinrichtung auf der Grundlage des Bestimmungsergebnisses der Bestimmungseinrichtung anpassbar.

Die Einstelleinrichtung kann zur Einstellung der Stellung des Bodenreflektors eine elektrische oder pneumatische oder elektromechanische Antriebseinrichtung umfassen. Der Bodenreflektor kann quer zu dem Gegenreflektor angeordnet sein.

In einer bevorzugten Ausgestaltung hat die Heizeinrichtung zwei Heizstrecken, die zueinander parallel und in Transportrichtung der Vorformlinge hintereinander angeordnet sind, wobei jede Heizstrecke mindestens einen Bodenreflektor aufweist, und wobei die Einstelleinrichtung zur gemeinsamen Einstellung der vorbestimmten Stellung aller Bodenreflektoren der zwei Heizstrecken ausgestaltet ist.

Alternativ kann aber auch für jeden Bodenreflektor eine eigene Einstelleinrichtung vorhanden sein. Vorteilhaft sind die Einstelleinrichtungen dann über eine gemeinsame Steuereinrichtung verbunden.

Außerdem kann die Einstelleinrichtung umfassen: eine erste Stützeinrichtung zum Stützen der Bodenreflektoren einer ersten Heizstrecke, eine zweite Stützeinrichtung zum Stützen der Bodenreflektoren einer zweiten Heizstrecke, und eine Kopplungseinrichtung zum Koppeln der ersten und zweiten Stützeinrichtung mit einer Antriebseinrichtung, die zum Antrieb der Kopplungseinrichtung und somit der ersten und zweiten Stützeinrichtung ausgestaltet ist.

Der Bodenreflektor kann an seiner den Vorformlingen zugewandten Seite eine Ausbuchtung haben, welche der Form der Vorformlinge entspricht.

Die Heizeinrichtung kann derart ausgestaltet sein, dass eine Verstellung mindestens zweier Begrenzungen ihrer Heizgasse über einen gemeinsamen Antrieb, insbesondere automatisch, erfolgt.

Es ist vorteilhaft, wenn die Heizeinrichtung Teil einer Blasmaschine zum Herstellen von Behältern, zur Aufnahme eines Produkts, aus Vorformlingen ist.

Die zuvor genannte Aufgabe wird ferner durch ein Heizverfahren für eine Blasmaschine nach Patentanspruch 14 gelöst.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung.

Nachfolgend ist die Erfindung unter Bezugnahme auf die beiliegende Zeichnung und anhand von Ausführungsbeispielen näher beschrieben. Es zeigen:
Fig. 1 eine Draufsicht auf eine Heizeinrichtung gemäß einem ersten Ausführungsbeispiel;
Fig. 2 eine Teilschnittansicht der Heizeinrichtung gemäß dem ersten Ausführungsbeispiel;
Fig. 3 eine weitere Teilschnittansicht der Heizeinrichtung gemäß dem ersten Ausführungsbeispiel;
Fig. 4 eine perspektivische Ansicht einer Einstelleinrichtung gemäß dem ersten Ausführungsbeispiel;
Fig. 5 eine Schnittansicht der Einstelleinrichtung gemäß dem ersten Ausführungsbeispiel;
Fig. 6 eine Schemazeichnung zur Veranschaulichung der Höhenverstellung eines Bodenreflektors in Abhängigkeit von der Länge eines Vorformlings gemäß einer Modifikation des ersten Ausführungsbeispiels;
Fig. 7 eine Schemazeichnung zur Veranschaulichung der Höhenverstellung des Bodenreflektors in Abhängigkeit von der Länge eines Vorformlings gemäß einem zweiten Ausführungsbeispiel;
Fig. 8 eine Teilschnittansicht einer Heizeinrichtung gemäß einem dritten Ausführungsbeispiel;
Fig. 9 eine weitere Teilschnittansicht der Heizeinrichtung gemäß dem dritten Ausführungsbeispiel;
Fig. 10 eine Teilschnittansicht einer Heizeinrichtung gemäß einem vierten Ausführungsbeispiel;
Fig. 11 bis Fig. 14 jeweils eine Teilschnittansicht einer Heizeinrichtung gemäß einem fünften Ausführungsbeispiel;
Fig. 15 und Fig. 16 jeweils eine Teilschnittansicht einer Heizeinrichtung gemäß einem sechsten Ausführungsbeispiel;
Fig. 17 eine Teilschnittansicht einer Heizeinrichtung gemäß einem siebten Ausführungsbeispiel;
Fig. 18 und Fig. 19 jeweils eine Teilschnittansicht einer Heizeinrichtung gemäß einem achten Ausführungsbeispiel; und
Fig. 20 eine Teilschnittansicht einer Heizeinrichtung gemäß einem neunten Ausführungsbeispiel.

In den Figuren sind gleiche oder funktionsgleiche Elemente, sofern nichts anderes angegeben ist, mit denselben Bezugszeichen versehen.

### (Erstes Ausführungsbeispiel)

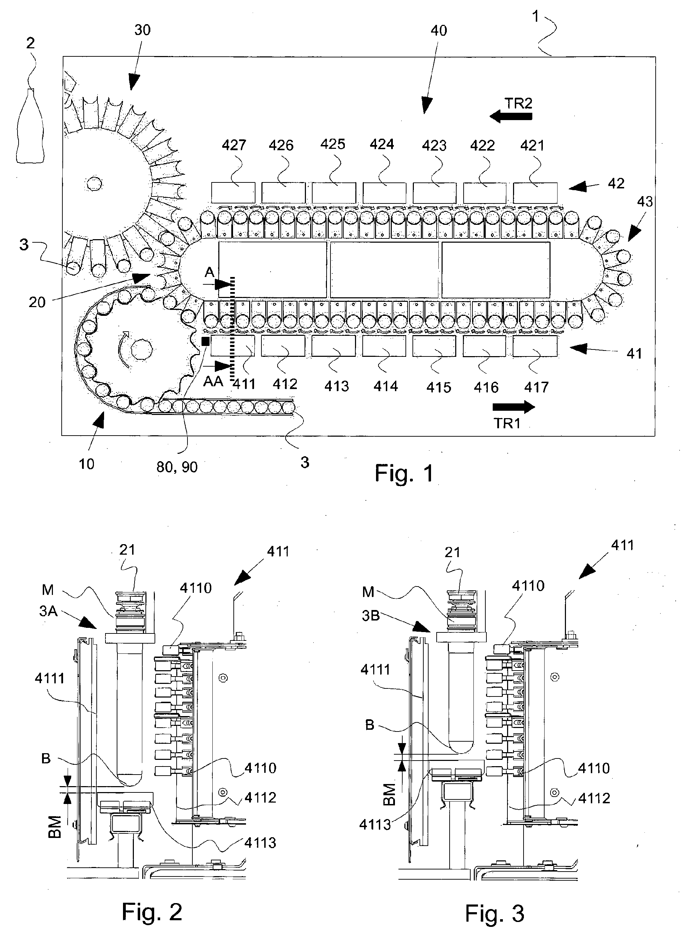

Fig. 1 zeigt einen Teil einer Blasmaschine 1 zur Herstellung von Behältern 2 aus Vorformlingen 3 aus Kunststoff, wie Polyethylenterephthalat (PET), Polypropylen (PP) usw. Die fertigen Behälter 2 können beispielsweise Flaschen sein, wie in Fig. 1 dargestellt, in die ein Produkt eingefüllt werden kann. Das Produkt kann insbesondere ein Getränk, ein Reinigungsmittel usw. sein. Die Vorformlinge 3 sind in Fig. 1 als Kreise für ihre Mündung dargestellt, wobei der Übersichtlichkeit halber nur zwei der Vorformlinge 3, am Anfang (in Fig. 1 unten) und am Ende (in Fig. 1 links) der von ihnen gebildeten Reihe, mit einem Bezugszeichen versehen sind.

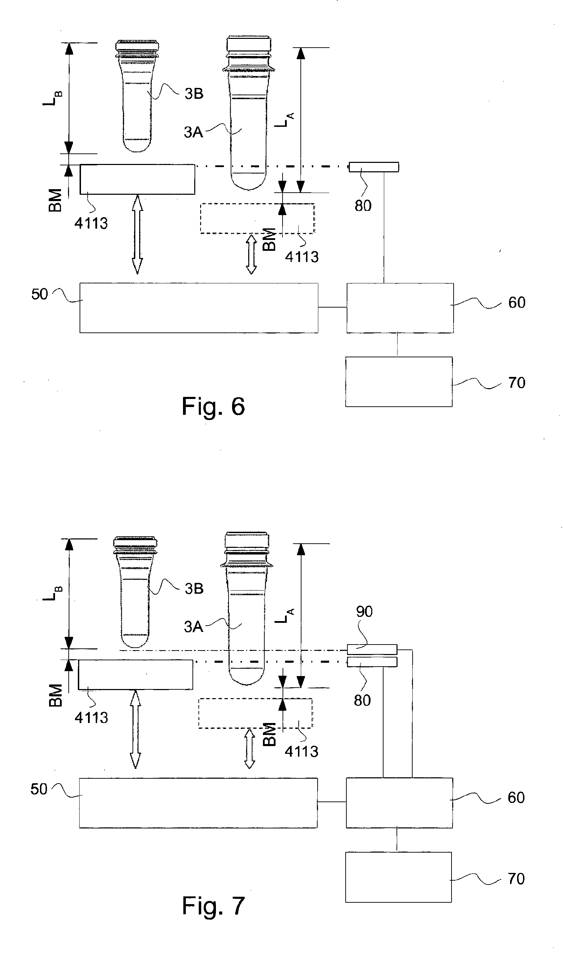

Die Blasmaschine 1 in Fig. 1 umfasst eine erste Transporteinrichtung 10, eine zweite Transporteinrichtung 20, eine dritte Transporteinrichtung 30, eine Heizeinrichtung 40 und eine nicht dargestellte Blaseinrichtung, die der dritten Transporteinrichtung 30 nachgeordnet ist. In der nicht dargestellten Blaseinrichtung können die mit der Heizeinrichtung 40 erwärmten Vorformlinge 3 durch Einblasen eines gasförmigen Mediums in die gewünschte Form des Behälters 2 geblasen werden. Die Blasmaschine 1 kann insbesondere eine Streckblasmaschine sein. In Fig. 1 sind zudem am Einlauf der Heizeinrichtung 40 schematisch eine Bodenreflektor-Erfassungseinrichtung 80 und eine Vorformlinglänge-Erfassungseinrichtung 90 gezeigt, die unter Bezugnahme auf Fig. 6 und Fig. 7 genauer beschrieben sind.

Die erste, zweite und dritte Transporteinrichtung 10, 20, 30 dienen jeweils zum Transport der Vielzahl von in Fig. 1 dargestellten Vorformlingen 3. Hierbei sind die Vorformlinge 3 jeweils in der Transportrichtung der ersten bis dritten Transporteinrichtung 10, 20, 30 in einer Reihe hintereinander angeordnet. Die erste Transporteinrichtung 10 ist in Fig. 1 als Sägezahnstern ausgebildet, der drehbar gelagert ist, wie in Fig. 1 mit einem Drehpfeil auf der ersten Transporteinrichtung 10 angegeben. Die erste Transporteinrichtung 10 übergibt die von ihr gehaltenen Vorformlinge 3 an die zweite Transporteinrichtung 20. Die zweite Transporteinrichtung 20 ist eine Förderstrecke, entlang welcher eine erste Heizstrecke 41 und eine zweite Heizstrecke 42 der Heizeinrichtung 40 angeordnet sind und zwischen denen die Heizeinrichtung 40 einen Umlenkbereich 43 hat. Die erste und zweite Heizstrecke 41, 42 sind jeweils lineare Heizstrecken. Im Umlenkbereich 43, in welchem die Vorformlinge 3 entlang eines Halbbogens geführt werden, werden die Vorformlinge 3 von einer ersten Transportrichtung TR1 in eine zweite Transportrichtung TR2 umgelenkt. Die erste Transportrichtung TR1, in welcher die Vorformlinge 3 durch die erste Heizstrecke 41 transportiert werden, ist in Fig. 1 entgegengesetzt zu der zweiten Transportrichtung TR2 gerichtet, in welcher die Vorformlinge 3 durch die zweite Heizstrecke 42 transportiert werden. In der zweiten Transporteinrichtung 20 werden die Vorformlinge 3 an ihrer Mündung von einer Spindel gehalten, die drehbar in einem Kettenglied gelagert ist. Es sind mehrere Kettenglieder, mit den darin gelagerten Spindeln, miteinander verbunden, so dass die Kettenglieder eine endlos umlaufende Kette und damit die Förderstrecke der zweiten Transporteinrichtung 20 bilden. Nach Durchlaufen der zweiten Heizstrecke 42 werden die Vorformlinge 3 von der zweiten Transporteinrichtung 20 an die dritte Transporteinrichtung 30 übergegeben, welche ebenfalls drehbar gelagert ist und die von der Heizeinrichtung 40 erwärmten Vorformlinge 3 zur nicht dargestellten Blaseinrichtung weitertransportiert. Die Vorformlinge 3 werden also mit der Heizeinrichtung 40 erwärmt, während sie mittels der zweiten Transporteinrichtung 20 durch die Heizstrecken 41, 42 transportiert werden, wie nachfolgend genauer beschrieben. Hierbei werden die Vorformlinge 3 mittels der Spindel um ihre Achse gedreht, wie in Fig. 1 durch kleine weiße Drehblockpfeile angedeutet.

Die erste Heizstrecke 41 dient zum ersten Heizen der Vorformlinge 3. Hierbei werden die Vorformlinge 3 am Umfang gleichmäßig erwärmt. Die erste Heizstrecke 41 hat eine Vielzahl von Heizmodulen, nämlich ein erstes Heizmodul 411, ein zweites Heizmodul 412, ein drittes Heizmodul 413, ein viertes Heizmodul 414, ein fünftes Heizmodul 415, ein sechstes Heizmodul 416, und ein siebentes Heizmodul 417. Die Heizmodule 411 bis 417 sind in dieser Reichenfolge in Richtung der ersten Transportrichtung TR1 in einer Reihe hintereinander angeordnet.

Die Anzahl der Heizmodule 411 bis 417 ist individuell anpassbar und hängt von der benötigten Aufheizzeit bzw. von der Anzahl der Heizelemente ab.

Die zweite Heizstrecke 42 dient zum zweiten Heizen der Vorformlinge 3. Hierbei werden die Vorformlinge 3 auf die endgültige Temperatur erwärmt, bei der sie mittels der nicht dargestellten Blaseinrichtung in einen Behälter 2 umgeformt werden können. Die endgültige Temperatur wird auch als Umformtemperatur der Vorformlinge 3 bezeichnet. Die zweite Heizstrecke 42 hat ebenfalls eine Vielzahl von Heizmodulen, nämlich ein erstes Heizmodul 421, ein zweites Heizmodul 422, ein drittes Heizmodul 423, ein viertes Heizmodul 424, ein fünftes Heizmodul 425, ein sechstes Heizmodul 426, und ein siebentes Heizmodul 427. Die Heizmodule 421 bis 427 sind in dieser Reichenfolge in Richtung der zweiten Transportrichtung TR2 in einer Reihe hintereinander angeordnet. Im Umlenkbereich 43 findet keine Erwärmung der Vorformlinge 3 mittels Heizstrecken bzw. Heizmodulen statt.

Die Heizmodule 411 bis 417 der ersten Heizstrecke 41 und die Heizmodule 421 bis 427 der zweiten Heizstrecke 42 sind in Fig. 1 zur Vereinfachung der Darstellung jeweils als außen neben der von der zweiten Transporteinrichtung 20 gebildeten Förderstrecke angeordnet gezeigt. Die genaue Ausführung und Anordnung der Heizmodule 411 bis 417 der ersten Heizstrecke 41 und der Heizmodule 421 bis 427 der zweiten Heizstrecke 42 geht aus Fig. 2 und Fig. 3 hervor.

Fig. 2 zeigt einen Schnitt, in Richtung der Pfeile A/AA entlang der dicken gestrichelten Linie in Fig. 1, durch das erste Heizmodul 411 der ersten Heizstrecke 41 für einen Fall, bei welchem die zweite Transporteinrichtung 20 längere Vorformlinge 3A durch das erste Heizmodul 411 transportiert. Ein längerer Vorformling 3A ist beispielsweise ein Vorformling 3, aus dem ein Behälter 2 bzw. eine Flasche mit einem maximalen Fassungsvermögen von etwa 1,0 Liter geformt werden soll. Jeder Vorformling 3 ist üblicherweise ein Spritzgussteil mit einem Boden B und einer Mündung M, die bereits der Mündung des fertigen Behälters 2 entspricht. In die Mündung M greift eine Spindel 21 der zweiten Transporteinrichtung 20 ein, wie zuvor beschrieben. Mittels der Spindel 21 kann der Vorformling 3 bzw. 3A um seine Längsachse gedreht werden. Die Heizmodule 412 bis 417 der ersten Heizstrecke 41 und die Heizmodule 421 bis 427 der zweiten Heizstrecke 42 sind jeweils auf die gleiche Weise aufgebaut wie das erste Heizmodul 411 der ersten Heizstrecke 41, so dass für deren Aufbau auch auf die Beschreibung des ersten Heizmoduls 411 verwiesen wird.

Das erste Heizmodul 411 hat eine Vielzahl von Heizelementen 4110, die in Fig. 2 auf der rechten Seite der Vorformlinge 3A angeordnet sind. Die Vielzahl von Heizelementen 4110 ist in einer Reihe übereinander angeordnet. In Fig. 2 sind der Übersichtlichkeit halber nur das oberste und unterste Heizelement 4110 mit einem Bezugszeichen versehen. Zusätzlich ist jedes Heizelement 4110 ein länglicher Strahler, dessen Länge in Richtung der ersten Transportrichtung TR1 angeordnet ist bzw. der sich in Richtung der ersten Transportrichtung TR1 erstreckt. Jedes Heizelement 4110 dient zur Abstrahlung von Wärmestrahlung bzw. Helzstrahlung auf den Vorformling 3A, welche den Vorformling 3A erwärmt. Die Heizstrahlung ist insbesondere Infrarotstrahlung (IR-Strahlung). Auf der linken Seite des Vorformlings 3A ist ein Gegenreflektor 4111 angeordnet, welcher sich sowohl in Richtung der Länge des Vorformlings 3A (in Fig. 2 die Vertikale) als auch in Richtung der Transportrichtung TR1 erstreckt. Der Gegenreflektor 4111 reflektiert die nicht von den Vorformlingen 3A aufgenommene Heizstrahlung wieder zum Vorformling 3A bzw. den davor und dahinter angeordneten Vorformlingen 3A. Zusätzlich ist auf der Seite des Heizelements 4110 ein Rückenreflektor 4112 vorgesehen, welcher ebenfalls die noch nicht von den Vorformlingen 3A aufgenommene Heizstrahlung wieder zum Vorformling 3A bzw. den davor und dahinter angeordneten Vorformlingen 3A reflektiert. Außerdem ist unter dem Vorformling 3A ein höhenverstellbarer Bodenreflektor 4113 angeordnet, welcher ebenfalls die nicht von den Vorformlingen 3A aufgenommene Heizstrahlung wieder zum Vorformling 3A bzw. den davor und dahinter angeordneten Vorformlingen 3A reflektiert. Der Bodenreflektor 4113 reflektiert die Heizstrahlung insbesondere in Richtung auf den Boden der zu heizenden Vorformlinge 3A. Der Bodenreflektor 4113 ist quer zum Rückenreflektor 4112 und zum Gegenreflektor 4111 angeordnet. Quer bedeutet hier, dass die Anordnung des Bodenreflektors um bis zu 10° von der exakten Querrichtung abweichen kann. Durch die Anordnung von Heizelementen 4110, Gegenreflektor 4111 und Bodenreflektor 4113 ist der Bodenreflektor 4113 zwischen dem Heizelement und dem Gegenreflektor bewegbar. Anders ausgedrückt, der Bodenreflektor 4113 ist relativ zum Gegenreflektor 4111 bewegbar. Zudem ist der Bodenreflektor 4113 relativ zu den Heizelementen 4110 bewegbar.

Der Bodenreflektor 4113 ist nah am Boden B des Vorformlings 3A bzw. den Böden B der Vorformlinge 3A angeordnet. Genauer gesagt, es ist ein vorbestimmter Abstand BM zwischen Boden B und Bodenreflektor 4113 eingestellt. Hierbei ist der Bodenreflektor 4113 so weit wie möglich nach oben zum Boden B des Vorformlings 3A geschoben, um sowohl die Heizstrahlung optimal zu nutzen als auch zu gewährleisten, dass der Vorformling 3A nicht überhitzt wird. Insgesamt bilden der Gegenreflektor 4111, der Rückenreflektor 4112 mit den Heizelementen 4110 und der Bodenreflektor 4113 zusammen eine in etwa U-förmige, relativ geschlossene Heizgasse, durch welche die zweite Transporteinrichtung 20 die Vorformlinge 3A transportiert. Durch den geringen vorbestimmten Abstand BM zwischen dem Bodenreflektor 4113 und dem Boden des Vorformlings 3A bzw. der Vorformlinge 3A ist gewährleistet, dass die von den Heizelementen 4110 abgegebene Heizstrahlung bei den längeren Vorformlingen 3A optimal genutzt wird. Es geht kaum Heizstrahlung ungenutzt verloren.

Fig. 3 zeigt den Schnitt von Fig. 2 durch das erste Heizmodul 411 der ersten Heizstrecke 41, wenn die zweite Transporteinrichtung 20 durch diese einen kürzeren Vorformling 3B transportiert. Ein kürzerer Vorformling 3B ist beispielsweise ein Vorformling 3, aus dem ein Behälter 2 bzw. eine Flasche mit einem maximalen Fassungsvermögen von etwa 0,5 Liter geformt werden soll. In diesem Fall ist der Bodenreflektor 4113 weiter nach oben geschoben bzw. gestellt, als bei dem in Fig. 2 dargestellten Fall, so dass wiederum der Gegenreflektor 4111, der Rückenreflektor 4112 mit den Heizelementen 4110 und der Bodenreflektor 4113 zusammen eine in etwa U-förmige, relativ geschlossene Heizgasse bilden, durch welche die zweite Transporteinrichtung 20 die kürzeren Vorformlinge 3B transportiert. Auch hier ist wieder ein geringer vorbestimmter Abstand BM zwischen dem Bodenreflektor 4113 und dem Boden B der kürzeren Vorformlinge 3B vorhanden, wie bei Fig. 2 beschrieben. Dadurch ist gewährleistet, dass die von den Heizelementen 4110 abgegebene Heizstrahlung nicht nur bei längeren Vorformlingen 3A sondern auch bei kürzeren Vorformlingen 3B optimal genutzt werden kann. Auch in diesem Fall geht kaum Heizstrahlung ungenutzt verloren.

Auf diese Weise kann die Heizstrahlung effektiv für die Erwärmung von Vorformlingen 3 unterschiedlicher Größe (Vorformlinge 3A, 3B) genutzt werden. Zur weiteren Energieeinsparung können die beiden unteren Heizelemente 4110 in Fig. 3 bei der Erwärmung von kürzeren Vorformlingen 3B deaktiviert werden, beispielsweise ausgeschaltet oder alternativ weggefahren und ausgeschaltet werden, so dass nur jeweils die Heizelemente 4110 zur Erwärmung der Vorformlinge 3 bzw. 3A, 3B zum Einsatz kommen, die auch tatsächlich für die Erwärmung der Vorformlinge 3 bzw. 3A, 3B benötigt werden. Das heißt, die beiden unteren Heizelemente 4110 in Fig. 2 werden nur bei der Erwärmung eines längeren Vorformlings 3A genutzt, wohingegen sie bei der Erwärmung eines kürzeren Vorformlings 3B nicht genutzt werden. Bei der Erwärmung eines längeren Vorformlings 3A findet also nur ein Teil der Heizelemente 4110 Verwendung, die zur Erwärmung des längeren Vorformlings 3A benötigt werden.

Das Heizmodul 411 bis 417 der ersten Heizstrecke 41 sowie ihre Reflektoren 4111, 4112, 4113 sind mit einem vorbestimmten Abstand zueinander angeordnet, um eine Luftzirkulation um die Vorformlinge 3 bzw. 3A, 3B zu gewährleisten. Zudem ist zwischen den Vorformlingen 3 bzw. 3A, 3B und den Heizelementen 4110 sowie den Reflektoren 4111, 4112, 4113 jeweils ein vorbestimmter Abstand vorgesehen, so dass auch hier eine Luftzirkulation um die Vorformlinge möglich ist. In gleicher Weise sind die Heizmodule 421 bis 427 der zweiten Heizstrecke 42 aufgebaut und angeordnet. Durch die Luftzirkulation in der ersten und zweiten Heizstrecke 41, 42 kann eine Überhitzung der Vorformlinge 3 bzw. 3A, 3B in der Heizeinrichtung 40 vermieden werden.

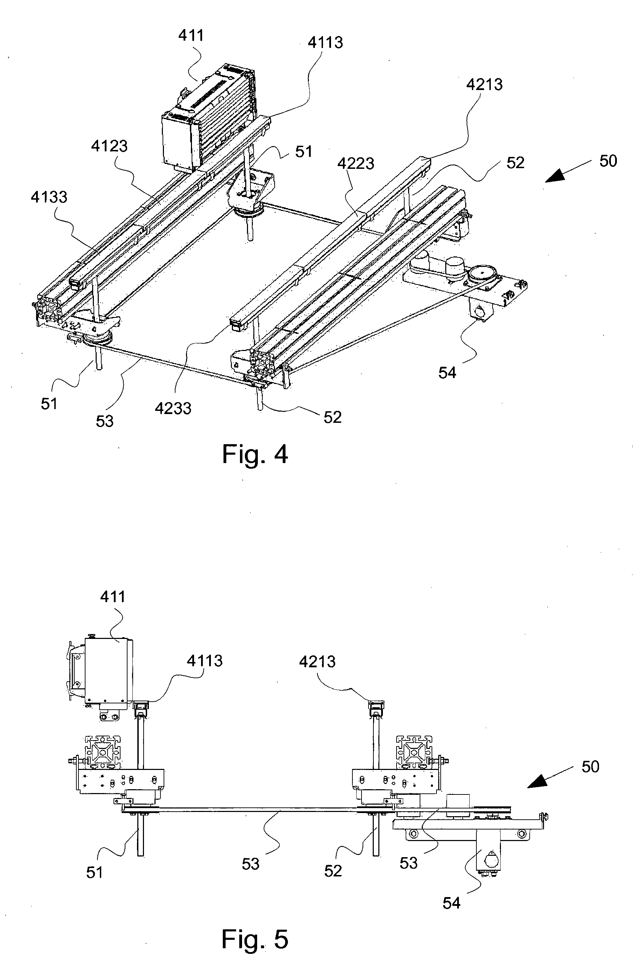

Fig. 4 und Fig. 5 zeigen eine Einstelleinrichtung 50 der Blasmaschine 1, mit welcher der Bodenreflektor 4113 des Heizmoduls 411 und gemeinsam mit ihm alle anderen Bodenreflektoren der Heizmodule 412 bis 417 und 421 bis 427 in ihrer Stellung, insbesondere ihrer Höhe, verstellt werden können. Alternativ kann auch ein einziger, durchgängiger Bodenreflektor 4113 in jeder Heizstrecke 41 vorgesehen sein. In Fig. 4 und Fig. 5 sind zur Vereinfachung der Darstellung nur das Heizmodul 411 der ersten Heizstrecke 41, sein Bodenreflektor 4113, der Bodenreflektor 4123 des zweiten Heizmoduls 412 der ersten Heizstrecke 41, der Bodenreflektor 4133 des dritten Heizmoduls 413 der ersten Heizstrecke 41, der Bodenreflektor 4213 des ersten Heizmoduls 421 der zweiten Heizstrecke 42, der Bodenreflektor 4223 des zweiten Heizmoduls 422 der zweiten Heizstrecke 42, und der Bodenreflektor 4233 des dritten Heizmoduls 423 der zweiten Heizstrecke 42 gezeigt. Der Bodenreflektor 4113, der Bodenreflektor 4123 und der Bodenreflektor 4133 der ersten Heizstrecke 41 werden von zwei Stäben 51 gestützt, die als Gewindespindel ausgeführt sind. Die zwei Stäbe 51 sind eine erste Stützeinrichtung zum Stützen der Bodenreflektoren 4113, 4123, 4133 der ersten Heizstrecke 41. Der Bodenreflektor 4213, der Bodenreflektor 4223 und der Bodenreflektor 4233 der zweiten Heizstrecke 42 werden von zwei weiteren Stäben 52 gestützt, die ebenfalls als Gewindespindel ausgeführt sind. Die zwei Stäbe 52 sind eine zweite Stützeinrichtung zum Stützen der Bodenreflektoren 4213, 4223, 4233 der zweiten Heizstrecke 42. Die Stäbe 51 und 52 bzw. die erste und zweite Stützeinrichtung 51, 52 sind mittels eines um sie gelegten Riemens 53 miteinander und mit einer Antriebseinrichtung 54 gekoppelt. Der Riemen 53 ist eine Kopplungseinrichtung zum Koppeln der ersten und zweiten Stützeinrichtung 51, 52 mit der Antriebseinrichtung 54. Somit bewirkt ein von der Antriebseinrichtung 54 hervorgerufener Antrieb des Riemens 53 eine Drehung der Stäbe 51, 52 um ihre Achse, was eine gemeinsame und synchrone Verstellung aller Bodenreflektoren der Heizmodule der ersten und zweiten Heizstrecke 41, 42 zur Folge hat. Die Bodenreflektoren der Heizmodule der ersten und zweiten Heizstrecke 41, 42 können also zentral verstellt werden. Die Antriebseinrichtung 54 kann beispielsweise eine elektrische, pneumatische oder elektromechanische Stellantriebseinrichtung sein.

Die Einstellung der Stellung der Bodenreflektoren der Heizmodule 411 bis 417 und 421 bis 427 mittels der Einstelleinrichtung 50 kann eine Bedienperson per Schalter oder Taster eines Bedientableaus der Heizeinrichtung 40 oder der Blasmaschine 1 vornehmen. Das heißt, die Einstellung der Stellung der Bodenreflektoren mittels der Einstelleinrichtung 50 erfolgt automatisch. Vorteilhaft handelt es sich um eine stufenlose Feineinstellung, die somit optimal an jede Preformlänge angepasst werden kann.

Alternativ dazu können die Bodenreflektoren der Heizmodule 411 bis 417 und 421 bis 427 mit der Einstelleinrichtung 50 automatisch eingestellt werden, wie nachfolgend in einer Modifikation des ersten Ausführungsbeispiels beschrieben.

Fig. 6 zeigt ein schematisches Diagramm zur Veranschaulichung der Höhenverstellung der Bodenreflektoren der Heizmodule 411 bis 417 und 421 bis 427 mittels der Einstelleinrichtung 50. Die Einstelleinrichtung 50 wird von einer Steuereinrichtung 60 der Blasmaschine 1 angesteuert. Für die Steuerung der Blasmaschine 1 greift die Steuereinrichtung 60 auf eine Speichereinrichtung 70 zu, in welcher Vorformlingdaten, wie beispielsweise die Länge L_{A}, L_{B}, der Durchmesser, das Material, die Wandstärke usw. des Vorformlings 3 bzw. der Vorformlinge 3A, 3B gespeichert sind. Zudem ist in der Speichereinrichtung 70 eine zu dem jeweiligen Vorformling 3 bzw. 3A, 3B passende Stellung, und insbesondere Höhe, der Bodenreflektoren der Heizmodule 411 bis 417 und 421 bis 427 für den Betrieb der Blasmaschine 1 mit diesem Vorformling 3 bzw. 3A, 3B gespeichert. Die passende Stellung, und insbesondere Höhe, der Bodenreflektoren hat einen derartigen Wert, dass bei Betrieb der Blasmaschine 1 der vorbestimmte Abstand BM zwischen Boden B des Vorformlings 3 bzw. der Vorformlinge 3A, 3B und den Bodenreflektoren der Heizmodule 411 bis 417 und 421 bis 427 eingestellt ist. Die Speichereinrichtung 70 ist Teil einer Bestimmungseinrichtung zur Bestimmung einer vorbestimmten Stellung eines Bodenreflektors in Abhängigkeit von der Länge eines von der Heizeinrichtung 40 zu heizenden Vorformlings 3 bzw. 3A, 3B. Die Steuereinrichtung 60, die ebenfalls Teil der Bestimmungseinrichtung ist, steuert die Einstelleinrichtung 50, insbesondere die Antriebseinrichtung 54 (vgl. Fig. 4 und Fig. 5), derart, dass die Stellung, und insbesondere die Höhe, der Bodenreflektoren 4113 usw. gleich der in der Speichereinrichtung 70 gespeicherten Höhe ist.

Darüber hinaus kann die Steuereinrichtung 60 ein Erfassungssignal einer Bodenreflektor-Erfassungseinrichtung 80 empfangen, welche die Stellung, und insbesondere die Höhe, eines Bodenreflektors, beispielsweise des Bodenreflektors 4113, und damit die Stellung, und insbesondere die Höhe, aller Bodenreflektoren der Heizmodule 411 bis 417 und 421 bis 427 erfasst. Die Bodenreflektor-Erfassungseinrichtung 80 kann neben der Speichereinrichtung 70 Teil der Bestimmungseinrichtung sein. Die Bodenreflektor-Erfassungseinrichtung 80 kann beispielsweise ein Geber in der Antriebseinrichtung 54 (vgl. Fig. 4 und Fig. 5), ein Wegmesssystem, usw. sein. Die Bodenreflektor-Erfassungseinrichtung 80 kann am Einlauf der Heizeinrichtung 40, also in Richtung der ersten Transportrichtung TR1 (vgl. Fig. 1) vor dem ersten Heizmodul 411 der ersten Heizstrecke 41 angeordnet sein.

Die Steuereinrichtung 60 kann die von der Bodenreflektor-Erfassungseinrichtung 80 erfasste Höhe der Bodenreflektoren mit der Höhe vergleichen, die für den nun mit der Blasmaschine 1 zu verarbeiteten Vorformling 3 bzw. 3A, 3B in der Speichereinrichtung 70 gespeichert ist. Ergibt der Vergleich, dass das Erfassungssignal der Bodenreflektor-Erfassungseinrichtung 80 verschieden von der in der Speichereinrichtung 70 gespeicherten Stellung, und insbesondere Höhe, ist, steuert die Steuereinrichtung 60 die Einstelleinrichtung 50, insbesondere die Antriebseinrichtung 54 (vgl. Fig. 4 und Fig. 5), derart, dass die Stellung, und insbesondere die Höhe, der Bodenreflektoren 4113 usw. gleich der in der Speichereinrichtung 70 gespeicherten Höhe ist. Die Steuereinrichtung 60 steuert also die Einstelleinrichtung 50, insbesondere die Antriebseinrichtung 54, auf der Grundlage des Erfassungssignals der Bodenreflektor-Erfassungseinrichtung 80. Die Blasmaschine 1, insbesondere die Heizeinrichtung 40, stellt sich automatisch auf den gerade zu verarbeitenden Vorformling 3 bzw. 3A, 3B um. Die von der Einstelleinrichtung 50 eingestellte vorbestimmte Stellung des Bodenreflektors 4113 ergibt sich auch als L_{A} + BM bzw. L_{B} + BM.

Mit der Einstelleinrichtung 50 kann eine sehr genaue und vor allem reproduzierbare Positionierung der Bodenreflektoren der Heizmodule 411 bis 417 und 421 bis 427 sichergestellt werden. Auf diese Weise ist auch gewährleistet, dass nach einem Sortenwechsel, einem Wechsel zwischen verschieden großen Vorformlingen, wieder die genaue gleiche Position der Bodenreflektoren in der Heizeinrichtung 40 eingestellt bleibt. Dies wirkt sich positiv auf den Heizprozess der Vorformlinge 3 bzw. 3A, 3B aus, was eine konstant bleibende Qualität der fertigen Behälter 2 zur Folge hat. Dadurch produziert die Blasmaschine 1 weniger Ausschuss.

Außerdem sind durch die zentrale motorische Einstellung der Bodenreflektoren der Heizmodule 411 bis 417 und 421 bis 427 mittels der Einstelleinrichtung 50 auf eine vorbestimmte Höhe sehr geringe, bis keine Produktionsausfallzeiten beim Sortenwechsel (Wechselzeit/ Garniturenwechselzeit) vorhanden.

Darüber hinaus können Fehleinstellungen beim Sortenwechsel vermieden werden, da ein Wechsel bedienerlos über die Maschinensteuerung ausgeführt werden kann.

Insgesamt können durch diese Vorteile die Betriebskosten der Heizeinrichtung 40 und somit der Blasmaschine 1 gesenkt werden.

### (Zweites Ausführungsbeispiel)

Fig. 7 zeigt ein ähnliches Diagramm, wie es in Fig. 6 in Bezug auf das erste Ausführungsbeispiel gezeigt ist, zur Erläuterung eines zweiten Ausführungsbeispiels der Blasmaschine 1. Die Blasmaschine 1 des zweiten Ausführungsbeispiels ist in weiten Teilen auf die gleiche Weise aufgebaut wie die Blasmaschine 1 des ersten Ausführungsbeispiels. Daher sind im Folgenden nur die Unterschiede zwischen dem ersten und zweiten Ausführungsbeispiel beschrieben. Im Übrigen wird auf die Beschreibung des ersten Ausführungsbeispiels verwiesen.

Im Unterschied zum ersten Ausführungsbeispiel hat die Blasmaschine 1 des zweiten Ausführungsbeispiels zusätzlich eine Vorformlinglänge-Erfassungseinrichtung 90 zur Erfassung der Länge L_{A}, L_{B} der Vorformlinge 3 bzw. 3A, 3B, die mittels der zweiten Transporteinrichtung 20 in die Heizeinrichtung 40 transportiert werden, wie in Fig. 7 gezeigt. Die Vorformlinglänge-Erfassungseinrichtung 90 ist am Einlauf der Heizeinrichtung 40, also in Richtung der ersten Transportrichtung TR1 (vgl. Fig. 1) vor dem ersten Heizmodul 411 der ersten Heizstrecke 41 angeordnet. In diesem Fall steuert die Steuereinrichtung 60 die Einstelleinrichtung 50, insbesondere die Antriebseinrichtung 54 (vgl. Fig. 4 und Fig. 5), auf der Grundlage des Erfassungssignals der Bodenreflektor-Erfassungseinrichtung 80 und der Vorformlinglänge-Erfassungseinrichtung 90. Die Blasmaschine 1, insbesondere die Heizeinrichtung 40, stellt sich also wiederum automatisch auf den gerade zu verarbeitenden Vorformling 3 bzw. 3A, 3B um. Die Vorformlinglänge-Erfassungseinrichtung 90 ist neben der Steuereinrichtung 60, der Speichereinrichtung 70 und der Bodenreflektor-Erfassungseinrichtung 80 Teil der Bestimmungseinrichtung.

Beispielsweise funktioniert die Steuerung mittels der Steuereinrichtung 60 derart, dass die Steuereinrichtung 60 aus der Speichereinrichtung 70 die Höhe der Bodenreflektoren der Heizmodule 411 bis 417 und 421 bis 427 und die Länge L_{A}, L_{B} des dazugehörigen Vorformlings 3 bzw. 3A, 3B greift. Die Steuereinrichtung 60 vergleicht die Höhe der Bodenreflektoren mit dem Erfassungssignal der Bodenreflektor-Erfassungseinrichtung 80 und die Länge L_{A}, L_{B} des dazugehörigen Vorformlings 3A bzw. 3B mit dem Erfassungssignal der Vorformlinglänge-Erfassungseinrichtung 90. Je nach Ergebnis des Vergleichs, nämlich wenn das Erfassungssignal der Bodenreflektor-Erfassungseinrichtung 80 verschieden von der in der Speichereinrichtung 70 gespeicherten Höhe und/oder das Erfassungssignal der Vorformlinglänge-Erfassungseinrichtung 90 verschieden von der in der Speichereinrichtung 70 gespeicherten Länge L_{A}, L_{B} ist, steuert die Steuereinrichtung 60 die Einstelleinrichtung 50, insbesondere die Antriebseinrichtung 54, derart, dass die Höhe der Bodenreflektoren 4113 usw. gleich der in der Speichereinrichtung 70 gespeicherten Höhe ist.

Mit der Blasmaschine 1 des zweiten Ausführungsbeispiels kann sichergestellt werden, dass bei einem Sortenwechsel von einem kurzen Vorformling 3B auf einen langen Vorformling 3A oder umgekehrt der Bodenreflektor der Heizmodule 411 bis 417 und 421 bis 427 entsprechend dem nun tatsächlich verwendeten Vorformling 3 eingestellt ist. Dadurch ist es gegenüber einer Verstellung durch einen Benutzer nicht mehr möglich, dass ein Verstellen der Bodenreflektoren der Heizmodule 411 bis 417 und 421 bis 427 von einem Benutzer etwa vergessen wird. Somit kann die Maschinensicherheit erheblich erhöht werden. Zusätzlich hat die Blasmaschine 1 des zweiten Ausführungsbeispiels auch die zuvor genannten Vorteile der Blasmaschine 1 des ersten Ausführungsbeispiels.

In einer Modifikation des zweiten Ausführungsbeispiels ist die Vorformlinglänge-Erfassungseinrichtung 90 anstelle der Bodenreflektor-Erfassungseinrichtung 80 vorgesehen und Teil der Bestimmungseinrichtung. In diesem Fall funktioniert die Steuerung der Einstelleinrichtung 50 analog zur Steuerung, die in Bezug auf das erste Ausführungsbeispiel beschrieben ist. Somit werden die gleichen Vorteile erzielt, wie sie beim ersten Ausführungsbeispiel genannt sind.

### (Drittes Ausführungsbeispiel)

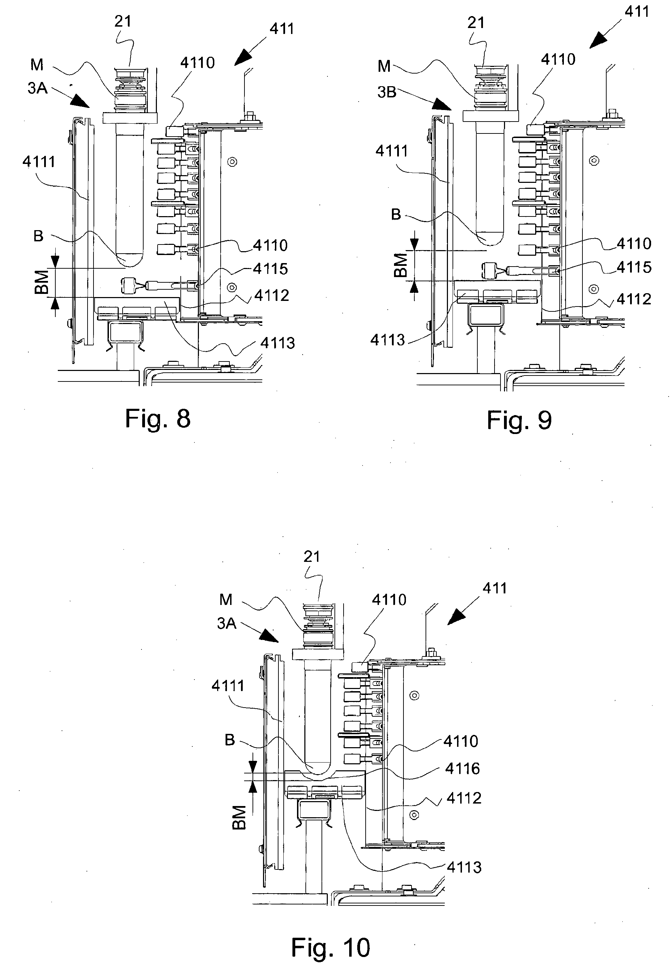

Fig. 8 zeigt einen Schnitt, in Richtung der Pfeile A/AA entlang der dicken gestrichelten Linie in Fig. 1, durch das erste Heizmodul 411 der ersten Heizstrecke 41 gemäß dem dritten Ausführungsbeispiel. Die Blasmaschine 1 des dritten Ausführungsbeispiels ist in weiten Teilen auf die gleiche Weise aufgebaut wie die Blasmaschine 1 des ersten Ausführungsbeispiels. Daher sind im Folgenden nur die Unterschiede zwischen dem ersten und dritten Ausführungsbeispiel beschrieben. Im Übrigen wird auf die Beschreibung des ersten Ausführungsbeispiels verwiesen.

Fig. 8 zeigt einen Fall, bei welchem die zweite Transporteinrichtung 20 längere Vorformlinge 3A durch das erste Heizmodul 411 transportiert. Auch hier ist ein längerer Vorformling 3A beispielsweise ein Vorformling 3, aus dem ein Behälter 2 bzw. eine Flasche mit einem maximalen Fassungsvermögen von etwa 1,0 Liter geformt werden soll.

Fig. 9 zeigt einen Fall, bei welchem die zweite Transporteinrichtung 20 kürzere Vorformlinge 3B durch das erste Heizmodul 411 transportiert. Auch hier ist ein kürzerer Vorformling 3B beispielsweise ein Vorformling 3, aus dem ein Behälter 2 bzw. eine Flasche mit einem maximalen Fassungsvermögen von etwa 0,5 Liter geformt werden soll.

Im Unterschied zum ersten Ausführungsbeispiel ist bei diesem Ausführungsbeispiel in Fig. 8 und Fig. 9 ein Heizelement 4115 vorhanden, das zwischen Boden B des Vorformlings 3A und dem Bodenreflektor 4113 angeordnet ist. Dieses Heizelement 4115 strahlt ebenso als Heizstrahlung insbesondere Infrarotstrahlung aus und wird auch Top-Strahler genannt. Auch hier ist zwischen Bodenreflektor 4113 und Boden B des Vorformlings 3A oder 3B ein vorbestimmter Abstand BM eingestellt, der hinsichtlich Ausnutzung der Heizstrahlung des Heizelements 4110 und 4115 optimal eingestellt ist. Bei diesem Ausführungsbeispiel ist zusätzlich zu der Höhenverstellung des Bodenreflektors 4113, die analog zum ersten Ausführungsbeispiel erfolgt, auch das Heizelement 4115 mitzuverstellen. Dies kann beispielsweise über einen entsprechenden Schienenmechanismus an dem Trägersystem des Heizelements 4115 erfolgen, der nicht dargestellt ist.

Die Blasmaschine 1 des dritten Ausführungsbeispiels hat die gleichen Vorteile, wie sie zuvor für die Blasmaschine 1 des ersten Ausführungsbeispiels genannt sind.

### (Viertes Ausführungsbeispiel)

Fig. 10 zeigt einen Schnitt, in Richtung der Pfeile A/AA entlang der dicken gestrichelten Linie in Fig. 1, durch das erste Heizmodul 411 der ersten Heizstrecke 41 gemäß dem vierten Ausführungsbeispiel. Auch die Blasmaschine 1 des vierten Ausführungsbeispiels ist in weiten Teilen auf die gleiche Weise aufgebaut wie die Blasmaschine 1 des ersten Ausführungsbeispiels. Daher sind im Folgenden nur die Unterschiede zwischen dem ersten und vierten Ausführungsbeispiel beschrieben. Im Übrigen wird auf die Beschreibung des ersten Ausführungsbeispiels verwiesen.

Der Bodenreflektor 4113 des Heizmoduls 411 des vierten Ausführungsbeispiels hat eine an den Boden B des Vorformlings 3 angepasste Ausbuchtung 4116 in Form einer Rundung. Allgemein gesagt, die Geometrie des Bodenreflektors 4113 ist also an die Geometrie des Bodens B des Vorformlings 3 angepasst.

Als Modifikation des vierten Ausführungsbeispiels kann der Bodenreflektor 4113 des Heizmoduls 411 als Ausbuchtung 4116 anstelle der Rundung auch ein V-Profil, ein W-Profil oder ähnliches haben. Auch in einer solchen Form ist die Geometrie des Bodenreflektors 4113 an die Geometrie des Bodens B des Vorformlings 3 angepasst.

Der Bodenreflektor 4113 dieses Ausführungsbeispiels und seiner Modifikationen kann die von den Heizelementen 4110 ausgesandte Strahlung besonders effektiv zum gerundeten Boden B des Vorformlings 3 reflektieren. Es ist insbesondere ein noch geringerer Abstand BM zwischen dem Bodenreflektor 4113 dieses Ausführungsbeispiels und seiner Modifikationen und dem Boden B des Vorformlings 3 möglich als bei den anderen Ausführungsbeispielen. Als Folge davon ist eine noch effizientere Nutzung der eingesetzten Energie realisiert.

### (Fünftes Ausführungsbeispiel)

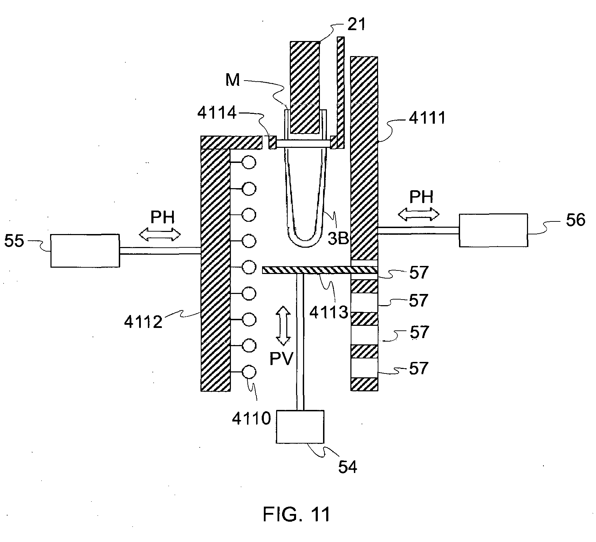

Fig. 11 zeigt einen Schnitt, in entgegengesetzt zu der Richtung der Pfeile A/AA entlang der dicken gestrichelten Linie in Fig. 1, durch das erste Heizmodul 411 der ersten Heizstrecke 41 gemäß dem fünften Ausführungsbeispiel. Demzufolge sind hier die Heizelemente 4110 auf der linken Seite in Fig. 11 angeordnet. In Fig. 11 sind der Übersichtlichkeit halber nicht alle Heizelemente 4110 mit einem Bezugszeichen versehen. Auch die Blasmaschine 1 dieses Ausführungsbeispiels ist in weiten Teilen auf die gleiche Weise aufgebaut wie die Blasmaschine 1 des ersten Ausführungsbeispiels. Daher sind im Folgenden nur die Unterschiede zwischen dem ersten und diesem Ausführungsbeispiel beschrieben. Im Übrigen wird auf die Beschreibung des ersten Ausführungsbeispiels verwiesen.

Wie in Fig. 11 gezeigt, sind bei diesem Ausführungsbeispiel der Gegenreflektor 4111, der Rückenreflektor 4112 und der Bodenreflektor 4113 jeweils bewegbar zueinander angeordnet, indem sie von einer der Antriebseinrichtungen 54, 55, 56 in Richtung der Pfeile PH, PV angetrieben werden. Insbesondere sind der Gegenreflektor 4111, der Rückenreflektor 4112 und der Bodenreflektor 4113 jeweils translatorisch zueinander bewegbar. Der Gegenreflektor 4111, ist hierbei so ausgestaltet, dass der Bodenreflektor 4113 an seinem einen Ende in eine oberste Aussparung 57 von mehreren untereinander angeordneten Aussparungen 57 des Gegenreflektors 4111 eingeführt ist.

In Fig. 11 ist ein Vorformling 3B mit der Spindel 21 gehalten, wobei in der Nähe seiner Mündung M ein Topreflektor 4114, beispielsweise in der Form einer die Mündung M umschließenden Platte, angeordnet ist. Der Topreflektor 4114 dient zum Abschirmen der Strahlung der Heizelemente 4110 gegen ein nach oben Austreten aus dem zwischen den Reflektoren 4111 bis 4113 gebildeten Raum. Somit kann der Topreflektor 4114 auch als Abschirmeinheit bezeichnet werden. Auch der Topreflektor 4114 kann translatorisch bewegbar sein, auch wenn dies in Fig. 11 nicht gezeigt ist.

Es ist vorzuziehen, dass die sich unterhalb von dem Bodenreflektor 4113 befindenden Heizstrahler 4110 im Betrieb ausgeschalten werden. Somit kann ein zusätzlicher unnötiger Energieverbrauch verhindert werden.

Hier bilden die Heizstrahler 4110 mit dem Rückenreflektor 4112 sowie der Gegenreflektor 4111, der Bodenreflektor 4113 und der Topreflektor 4114 zusammen eine relativ geschlossene Heizgasse. Die Reflektoren 4111, 4113, 4114 und die Heizstrahler 4110 können auch als Begrenzungen dieser Heizgasse bezeichnet werden. Durch die Verstellbarkeit von mindestens 2 Begrenzungen, also mindestens einem der Reflektoren 4111, 4113, 4114 und/oder der Heizstrahler 4110 und des Rückenreflektors 4112 der Heizgasse, lässt sich die um den Vorformling 3B befindende Heizgasse noch weiter verkleinern. Mit mindestens drei verstellbaren Begrenzungen lässt sich die Heizgasse noch weiter verkleinern. Bevorzugt sind mindestens zwei Begrenzungen über eine gemeinsame oder zwei Antriebseinrichtung(en) 54, 55, 56 automatisch verstellbar. Bei einem gemeinsamen Antrieb könnten mindestens zwei Begrenzungen- insbesondere die Begrenzung, welche durch die Heizstrahler 4110 gebildet wird, und die Begrenzung, welche der Gegenreflektor 4111 bildet - über ein nicht dargestelltes Gelenk miteinander gekoppelt sein.

Es ist ebenfalls daran gedacht, wie bei dem ersten Ausführungsbeispiel, die Geometrie eines Vorformlings 3 bzw. 3A, 3B vor dem ersten Heizmodul 411 zu erfassen, das Messergebnis der Steuereinrichtung 60 (Fig. 6 und Fig. 7) zuzuführen und auf Basis dieses Messergebnisses mindestens eine Begrenzung, bevorzugt zwei, besonders bevorzugt drei Begrenzungen automatisch zu verstellen. Diese Verstellung erfolgt analog zu der Verstellung, die beim ersten Ausführungsbeispiel in Bezug auf den Bodenreflektor 4113 ausführlich beschrieben ist. Das heißt, dass insbesondere durch die in der Speichereinrichtung 70 (Fig. 6 und Fig. 7) hinterlegten Vorformlingdaten, wie z.B. die Geometrie eines Vorformlings 3 bzw. 3A, 3B, eine automatische und optimale Einstellung im Hinblick auf den Energieverbrauch der Heizstrahler 4110 bzw. Reflektoren 4111 bis 4114 gewährleistet werden kann.

Prinzipiell ist aber auch an eine Verstellung von mindestens einer Begrenzung von Hand möglich. Auch Kombinationen von einer automatischen und manuellen Verstellung bei unterschiedlichen Begrenzungen sind denkbar.

Auch ist es möglich, die Begrenzungen nur in bestimmten Bereichen entlang des Transportwegs der Vorformlinge 3 bzw. 3A, 3B verstellbar zu gestalten. Aus Kostengründen könnte somit beispielsweise das letzte Viertel oder der ganze Rückweg, also die letzte Hälfte der Heizeinrichtung 40, insbesondere die zweite Heizstrecke 42 der Heizeinrichtung 40 oder ein Teil davon, unverstellbar ausgestaltet sein, weil man bei einigen Vorformlingen diese Heizmodule gar nicht benötigt.

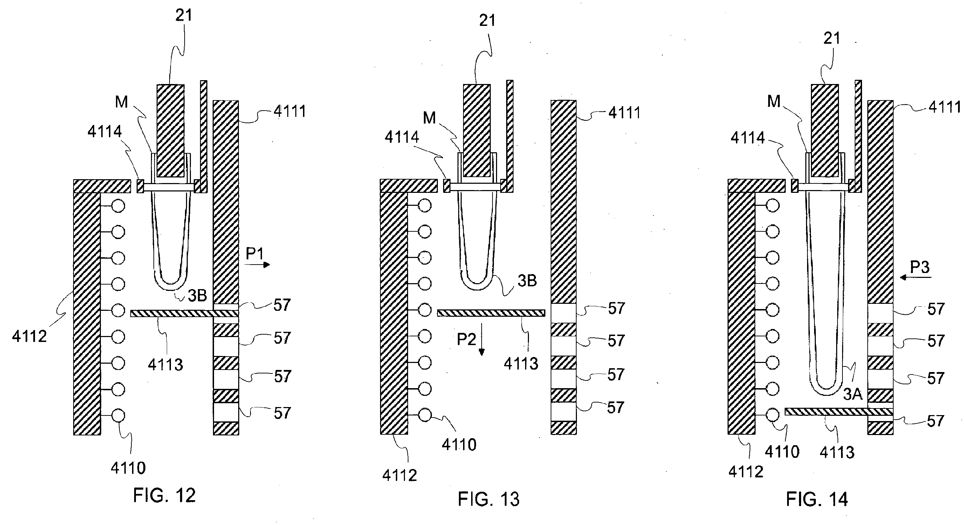

Fig. 12 bis Fig. 14, in welchen der Übersichtlichkeit halber nicht alle Heizelemente 4110 mit einem Bezugszeichen versehen sind, zeigen den Vorgang einer Verstellung der Reflektoren 4111 bis 4113, wenn von einem kürzeren Vorformling 3B auf einen längeren Vorformling 3A umgestellt wird. Hierbei wird, ausgehend von dem Zustand von Fig. 12, der Gegenreflektor 4111 in Richtung eines Pfeils P1 in Fig. 12, also in Querrichtung zum Rückenreflektor 4112, vom Rückenreflektor 4112 und/oder einem Vorformling 3 wegbewegt. Dadurch ist der Bodenreflektor 4113 nicht mehr in der Aussparung 57 angeordnet, wie in Fig. 13 gezeigt. Danach kann der Bodenreflektor 4113 durch Antrieb mittels der Antriebseinrichtung 54 (Fig. 11) in Richtung eines Pfeils P2 in Fig. 13 nach unten in Fig. 13 bewegt werden. Anschließend kann der Gegenreflektor 4111 in Richtung eines Pfeils P3 in Fig. 14, also in Querrichtung zum Rückenreflektor 4112, wieder zum Rückenreflektor 4112 hinbewegt werden, wie in Fig. 14 gezeigt. Dadurch ist der Bodenreflektor 4113 hier in die unterste Aussparung 57 des Gegenreflektors 4111 eingeführt. Aufgrund dessen kann nun ein längerer Vorformling 3A von der Spindel 21 zwischen den Reflektoren 4111 bis 4114 gehalten und zwischen ihnen hindurchgeführt werden. Wie oben beschrieben, kann dabei die Umstellung von einem kürzeren Vorformling 3B auf einen längeren Vorformling 3A insbesondere automatisch oder teilweise automatisch anhand der in der Speichereinrichtung 70 (Fig. 6 und Fig. 7) hinterlegten Vorformlingdaten, insbesondere deren Geometrien, erfolgen.

Da es sich bei dem Bodenreflektor 4113 auch um ein sehr dünnes Blech handeln kann, können die Aussparungen 57 relativ schmal gestaltet werden. Es wäre aber auch denkbar, zumindest die Aussparungen 57, die bei längeren Vorformlingen 3A innerhalb der Heizgasse angeordnet sind, mit nicht gezeigten Füllmitteln zu verschließen. Die Füllmittel können ebenfalls reflektierend sein.

Mit der gezeigten Ausführung können Kollisionen bei einer gemeinsamen Zustellung oder Bewegung der Reflektoren 4111, 4112, 4113, die insbesondere stufenlos sein kann, vermieden werden, da der Bodenreflektor 4113 in den Gegenreflektor 4111 einfahrbar ist.

Durch die Anordnung von Heizelementen 4110, Gegenreflektor 4111, Rückenreflektor 4112, Bodenreflektor 4113 und Topreflektor 4114 ist der Bodenreflektor 4113 zwischen den Heizelementen 4110 und dem Gegenreflektor 4111 bewegbar. Anders ausgedrückt, der Bodenreflektor 4113 ist relativ zum Gegenreflektor 4111 bewegbar. Zudem ist der Bodenreflektor 4113 relativ zu den Heizelementen 4110 bewegbar. Ferner sind der Gegenreflektor 4111 und der Rückenreflektor 4112 relativ zueinander bewegbar. Der Gegenreflektor 4111 und/oder der Bodenreflektor 4113 können so weit wie gewünscht an den jeweiligen Vorformling 3A, 3B herangefahren werden.

Hiermit ist es möglich, den in der Heizeinrichtung für die Vorformlinge 3 gebildeten Heiztunnel, zur besseren Energieausnutzung noch enger an unterschiedliche Vorformlinge 3 bzw. 3A, 3B oder anhand der Taumeltoleranzen einstellen zu können.

Dieses Prinzip ist auch bei einer anderen Art von Heizeinrichtung 40 anwendbar, bei der Vorformlinge 3 bzw. 3A, 3B in Heiztaschen, welche die einzelnen Vorformlinge - jeden für sich - umgeben, transportiert werden.

### (Sechstes Ausführungsbeispiel)

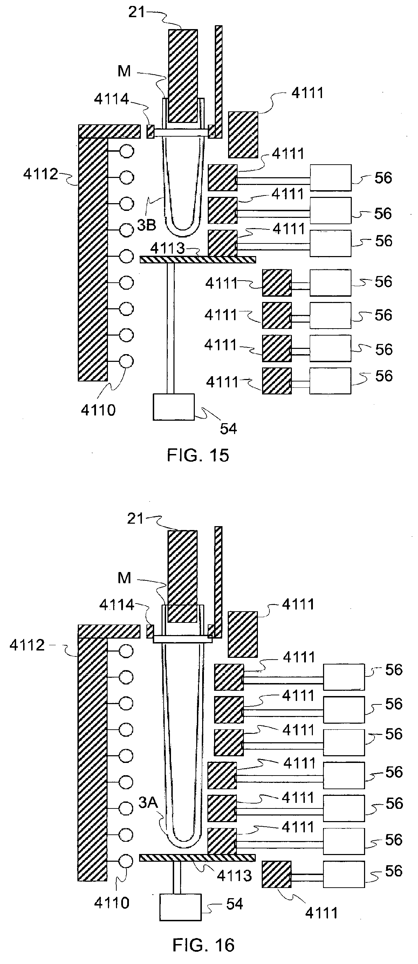

Fig. 15 und Fig. 16 zeigen jeweils eine Ausführungsvariante der Reflektoren 4111, 4112, 4113, 4114, bei welcher der Gegenreflektor 4111 in eine Vielzahl von Segmenten unterteilt ist, die in einer Reihe nebeneinander oder untereinander angeordnet sind. Hierbei ist das oberste Segment des Gegenreflektors 4111, das im Bereich der Mündung des Vorformlings 3B (Fig. 15), 3A (Fig. 16) angeordnet ist, bei der in Fig. 15 und Fig. 16 gezeigten Ausführung fest angeordnet. Die anderen Segmente des Gegenreflektors 4111 können jeweils mit einer Antriebseinrichtung 56 bzw. einer der Antriebseinrichtungen 56 einzeln quer zum Rückenreflektor 4112 und/oder einem Vorformling 3 bzw. 3A, 3B bewegt werden, wie in Fig. 15 und Fig. 16 gezeigt. Die Befestigung des jeweiligen Segments des Gegenreflektors 4111 an der Antriebseinrichtung 56 kann teleskopartig ausgeführt sein, wie in Fig. 15 und Fig. 16 gezeigt. Durch diese Bewegung kann ein Raum geschaffen werden, in dem sich der Bodenreflektor 4113 entlang von Segmenten des Gegenreflektors 4111 translatorisch bewegen kann. Der Bodenreflektor 4113 kann hierbei mittels der Antriebseinrichtung 54 soweit bewegt werden, bis er an einem der Segmente des Gegenreflektors 4111 von unten anliegt, so dass ein nach unten abgeschlossener Raum um den Vorformling 3A, 3B gebildet wird. Auch in Fig. 15 und Fig. 16 sind der Übersichtlichkeit halber nicht alle Heizelemente 4110 mit einem Bezugszeichen versehen.

Auch auf diese Weise kann der Bodenreflektor 4113 in den Gegenreflektor 4111, insbesondere stufenlos, einfahren. Zudem kann auch auf diese Weise zwischen der Beheizung eines kürzeren und eines längeren Vorformlings 3B, 3A und umgekehrt umgestellt werden. Die Segmente des Gegenreflektors 4111 und/oder der Bodenreflektor 4113 können so weit wie gewünscht an den jeweiligen Vorformling 3A, 3B herangefahren werden.

Zwischen den Segmenten des Gegenreflektors 4111 kann beispielsweise Luft zwischen die Reflektoren 4111, 4112, 4113, 4114 eingeblasen werden, die insbesondere als Oberflächenkühlung für den Vorformling 3 bzw. 3A, 3B dient.

Ansonsten ist dieses Ausführungsbeispiel aufgebaut, wie bei dem fünften Ausführungsbeispiel beschrieben.

### (Siebtes Ausführungsbeispiel)

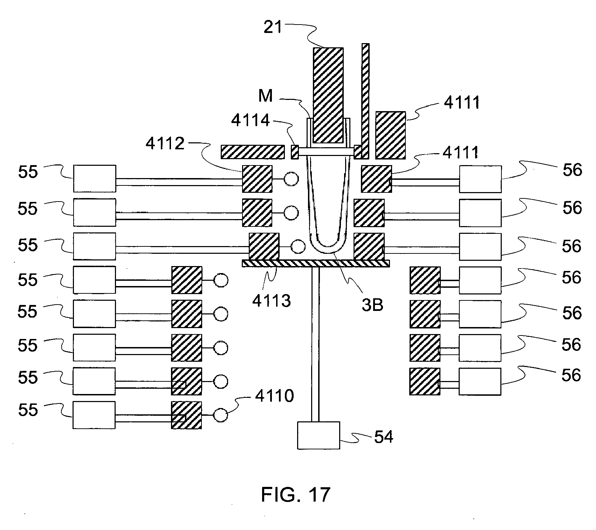

Fig. 17 zeigt eine Ausführungsvariante der Reflektoren 4111, 4112, 4113, 4114, bei welcher nicht nur Gegenreflektor 4111 sondern auch der Rückenreflektor 4112 in eine Vielzahl von Segmenten unterteilt ist, die in einer Reihe nebeneinander oder untereinander angeordnet sind. Hierbei ist der Gegenreflektor 4111 aufgebaut, wie bei dem sechsten Ausführungsbeispiel beschrieben. In Fig. 17 sind der Übersichtlichkeit halber nicht alle Heizelemente 4110 und alle Segmente des Gegenreflektor 4111 und des Rückenreflektors 4112 mit einem Bezugszeichen versehen.

Bei dem Rückenreflektor 4112 sind alle Segmente jeweils mit einer Antriebseinrichtung 55 quer zum Gegenreflektor 4111 und/oder einem Vorformling 3 bzw. 3B bewegbar, wie in Fig. 17 gezeigt. Diese Bewegbarkeit ist analog zu der Bewegbarkeit der Segmente des Gegenreflektors 4111. Dadurch kann wiederum ein Raum geschaffen werden, in dem sich der Bodenreflektor 4113 entlang von Segmenten des Gegenreflektors 4111 und von Segmenten des Rückenreflektors 4112 translatorisch bewegen kann. Der Bodenreflektor 4113 kann hierbei mittels der Antriebseinrichtung 54 soweit bewegt werden, bis er an einem der Segmente des Gegenreflektors 4111 und/oder einem der Segmente des Rückenreflektors 4112 von unten anliegt, so dass ein nach unten abgeschlossener Raum um den Vorformling 3A, 3B gebildet wird. Auch auf diese Weise kann zwischen der Beheizung eines kürzeren und eines längeren Vorformlings 3B, 3A und umgekehrt umgestellt werden. Die Segmente des Gegenreflektors 4111 und/oder die Segmente des Rückenreflektors 4112 können einzeln so weit wie gewünscht an den Vorformling 3A, 3B herangefahren werden.

Mit der gezeigten Ausführung können Kollisionen bei einer gemeinsamen Zustellung oder Bewegung der Reflektoren 4111, 4112, 4113, die insbesondere stufenlos sein kann, vermieden werden, da der Bodenreflektor 4113 sowohl in den Gegenreflektor 4111 als auch den Rückenreflektor 4112 einfahrbar ist.

Wie zwischen den Segmenten des Gegenreflektors 4111 kann auch zwischen den Segmenten des Rückenreflektors 4112 beispielsweise Luft zwischen die Reflektoren 4111, 4112, 4113, 4114 eingeblasen werden, die insbesondere als Oberflächenkühlung für den Vorformling 3 bzw. 3A, 3B dient.

Auch wenn dies in Fig. 17 nicht gezeigt ist, kann auch der Bodenreflektor 4113 segmentiert ausgestaltet sein. Hierbei können die einzelnen Segmente des Bodenreflektors 4113 ähnlich bewegt werden, wie die Segmente des Gegenreflektors 4111 und/oder des Rückenreflektors 4112.

Ansonsten ist dieses Ausführungsbeispiel aufgebaut, wie bei dem sechsten Ausführungsbeispiel beschrieben.

### (Achtes Ausführungsbeispiel)

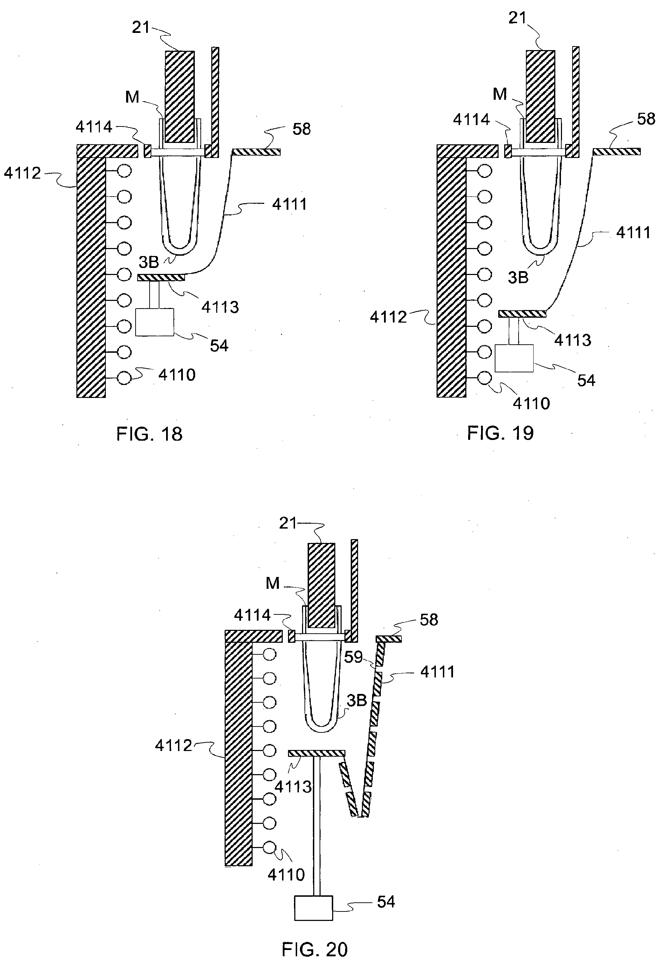

Fig. 18 und Fig. 19 zeigen jeweils eine Ausführungsvariante der Reflektoren 4111, 4112, 4113, 4114, bei welcher der Gegenreflektor 4111 als flexibles Element, wie beispielsweise eine Strahlung reflektierende Folie, ein Strahlung reflektierender Film, usw. ausgebildet ist. Der Gegenreflektor 4111 ist demzufolge ein biegbarer Reflektor. Zumindest die dem Vorformling 3B zugewandte Oberfläche des Gegenreflektors 4111 ist insbesondere aus Metall gefertigt. In Fig. 18 und Fig. 19 sind der Übersichtlichkeit halber nicht alle Heizelemente 4110 mit einem Bezugszeichen versehen.

Der Gegenreflektor 4111 ist in Fig. 18 und Fig. 19 jeweils an seinem einen Ende an einer oberen Halterung 58 angeordnet. An seinem anderen Ende ist der Gegen reflektor 4111 an dem Bodenreflektor 4113 angeordnet. Wird der Bodenreflektor 4113 nun, beispielsweise mittels der Antriebseinrichtung 54, translatorisch nach oben oder unten in Fig. 18 bewegt, biegt sich der Gegenreflektor 4111, wie in Fig. 18 und Fig. 19 gezeigt. Somit werden der Gegenreflektor 4111 und der Bodenreflektor 4113 gemeinsam bewegt. Eine Bewegung des Bodenreflektors 4113 bewirkt eine Bewegung des Gegenreflektors 4111.

Mit der gezeigten Ausführung können Kollisionen bei einer gemeinsamen Zustellung oder Bewegung der Reflektoren 4111, 4113, die insbesondere stufenlos sein kann, vermieden werden, da der Reflektor 4111 flexibel ausgestaltet ist.

Ansonsten ist dieses Ausführungsbeispiel aufgebaut, wie bei dem fünften Ausführungsbeispiel beschrieben.

### (Neuntes Ausführungsbeispiel)

Fig. 20 zeigt eine weitere Variante für einen biegbaren Reflektor. Bei diesem Ausführungsbeispiel ist der Gegenreflektor 4111 eine flexible Kette, bei welcher mehrere Segmente über eine Verbindung 59 miteinander verbunden sind. In Fig. 20 sind der Übersichtlichkeit halber nicht alle Heizelemente 4110 mit einem Bezugszeichen versehen.

Auch in Fig. 20 ist der Gegenreflektor 4111 an seinem einen Ende an einer oberen Halterung 58 angeordnet. An seinem anderen Ende ist der Gegenreflektor 4111 an dem Bodenreflektor 4113 angeordnet. Dadurch biegt sich der Gegenreflektor 4111, wie in Fig. 20 gezeigt, wenn der Bodenreflektor 4113, beispielsweise mittels der Antriebseinrichtung 54, translatorisch nach oben oder unten in Fig. 20 bewegt wird, so dass er optimal zum jeweils zu beheizenden Vorformling 3 bzw. 3A, 3B angeordnet ist. Insbesondere falten sich die einzelnen Segmente des Gegenreflektors 4111, wie in Fig. 20 gezeigt. Somit werden auch hier der Gegenreflektor 4111 und der Bodenreflektor 4113 gemeinsam bewegt. Eine Bewegung des Bodenreflektors 4113 bewirkt eine Bewegung des Gegenreflektors 4111.

Somit können auch bei diesem Ausführungsbeispiel Kollisionen bei einer gemeinsamen Zustellung oder Bewegung der Reflektoren 4111, 4113, die insbesondere stufenlos sein kann, vermieden werden, da der Reflektor 4111 flexibel ausgestaltet ist.

Ansonsten ist dieses Ausführungsbeispiel aufgebaut wie bei dem achten Ausführungsbeispiel beschrieben.

### (Allgemeines)

Alle zuvor beschriebenen Ausgestaltungen der Blasmaschine 1, der Heizeinrichtung 40 und des zuvor beschriebenen Heizverfahrens können einzeln oder in allen möglichen Kombinationen Verwendung finden. Das erste bis neunte Ausführungsbeispiel sind beliebig miteinander kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Es sind auch andere Größen für die Vorformlinge 3A, 3B wählbar, als sie in der vorangegangenen Beschreibung genannt sind. Insbesondere kann der längere Vorformling 3A ein Vorformling 3 sein, aus dem ein Behälter 2 bzw. eine Flasche mit einem maximalen Fassungsvermögen von etwa 1,5 Liter oder 2,0 Liter geformt werden soll, während als kürzerer Vorformling 3B wieder ein Vorformling 3 gewählt ist, aus dem ein Behälter 2 bzw. eine Flasche mit einem maximalen Fassungsvermögen von etwa 0,5 Liter geformt werden soll. Der kürzere Vorformling 3B kann jedoch auch ein Vorformling 3 sein, aus dem ein Behälter 2 bzw. eine Flasche mit einem maximalen Fassungsvermögen von etwa 0,33 Liter oder 1,0 Liter geformt werden soll. Es sind selbstverständlich auch andere Größenverhältnisse möglich.

Die Anzahl der Heizelemente 4110 des Heizmoduls 411 ist je nach Bedarf wählbar. Es können in einem Heizmodul der Heizmodule 411 bis 417 und 421 bis 427 insbesondere mehr oder weniger als in den Figuren gezeigte Heizelemente 4110 Verwendung finden.

Außerdem ist die Anzahl der Heizmodule 411 bis 417 und 421 bis 427 je nach Bedarf wählbar. Es können mehr oder weniger als in den Figuren gezeigte Heizmodule 411 bis 417 und 421 bis 427 Verwendung finden.

Die Einstellung der Bodenreflektoren der Heizstrecken 41, 42 mittels der Einstelleinrichtung kann neben dem Einrichten der Heizeinrichtung 40 zum Heizen eines speziellen Vorformlings 3 bzw. 3A, 3B, wie zuvor beschrieben, auch während einem Heizen von Vorformlingen 3 bzw. 3A, 3B mit der Heizeinrichtung 40 ausgeführt werden. Während einem Heizen von Vorformlingen 3 bzw. 3A, 3B können die Bodenreflektoren feinjustiert bzw. feineingestellt werden, wenn zum Beispiel mit einer Qualitätserfassungseinrichtung zur Erfassung der Qualität der mit der Heizeinrichtung 40 erwärmten Vorformlinge 3 bzw. 3A, 3B festgestellt wird, dass die erfasste Qualität nicht ausreichend ist. Die Feineinstellung ist bevorzugt ebenfalls eine stufenlose Einstellung. Die Feineinstellung muss jedoch nicht nur während einem Heizen von Vorformlingen 3 bzw. 3A, 3B mit der Heizeinrichtung 40 ausgeführt werden. Sie kann auch beim Einrichten der Heizeinrichtung 40 zusätzlich zu einer vorangegangenen Einstellung der Bodenreflektoren der Heizstrecken 41, 42 ausgeführt werden.

Die Anzahl und/oder Größe der Segmente des Gegenreflektors 4111 ist beliebig wählbar. Zudem ist die Anzahl und/oder Größe der Segmente des Rückenreflektors 4112 beliebig wählbar. Es kann auch mehr als ein Segment des Gegenreflektors 4111 fest angeordnet sein. Zudem kann auch bei dem Rückenreflektor 4112 mindestens ein Segment fest angeordnet sein.

Bei den zuvor beschriebenen Ausführungsbeispielen können alle Reflektoren, also der Gegen reflektor 4111, der Rückenreflektor 4112, der Bodenreflektor 4113 und die Abschirmeinheit 4114 verstellbar, insbesondere durch eine Antriebseinrichtung 54, 55, 56 automatisch verstellbar sein. Dadurch können sich die Reflektoren 4111, 4112, 4113, 4114 optimal auf die Geometrie des zu beheizenden Vorformlings 3 anpassen. Insbesondere ist eine automatische Einstellung auf den zu beheizenden Vorformling 3 durch optische Erkennung der Geometrie des zu beheizenden Vorformlings 3 möglich.

Es ist ebenfalls denkbar, die Reflektoren 4111, 4112, 4113, 4114 und/oder die Heizelemente 4110 während des Betriebs auf Basis einer Temperaturmessung des Vorformlings 3 bzw. 3A, 3B an mehreren Punkten in der Heizeinrichtung 40 zu verstellen. Somit können insbesondere die Heizelemente 4110 mit konstanter Leistung betrieben werden, was deren Haltbarkeit erhöht. Zudem kann, insbesondere gleichzeitig, eine Temperaturregelung stattfinden, um ein optimales Heizprofil auf die Vorformlinge 3 bzw. 3A, 3B anzuwenden. Die Vorgabe der Sollwerte der Temperaturregelung kann zusätzlich durch einen weiteren Regelkreis stattfinden, indem die Wanddicke der fertig geblasenen Behälter 2 in mehreren Höhen am Behälter 2 gemessen wird und die Werte zur Regelung der korrespondierenden Temperaturen in den korrespondierenden Höhen am Vorformling 3 bzw. 3A, 3B zugeführt werden. Wird beispielsweise die Wandstärke im mittleren Bereich zu dünn, so war der Vorformling 3 bzw. 3A, 3B an der korrespondierenden Stelle zu heiß-folglich kann ein in der Höhe in der Mitte angesiedelter Reflektor etwas weiter weg gestellt werden oder das Heizelement 4110 in der korrespondierenden Höhe in der Leistung etwas gesenkt werden.

Wie die Antriebseinrichtung 54 können auch die Antriebseinrichtungen 55, 56 beispielsweise eine elektrische, pneumatische oder elektromechanische Stellantriebseinrichtung sein.

Bei den zuvor beschriebenen Ausführungsbeispielen ist mindestens ein Reflektor 4111, 4112, 4113, 4114, insbesondere der Bodenreflektor 4113, in mindestens 2 Achsen verstellbar.

Die Heizeinrichtung 40 kann andere Strahlung als Infrarotstrahlung, die auch Nichtinfrarotstrahlung (NIR-Strahlung) genannt sein kann, zum Heizen der Vorformlinge 3 verwenden.

Die Vorformlinge 3 können in der Heizeinrichtung 40 derart angeordnet sein, dass sie stehend oder hängend geheizt werden. Demzufolge ist die Heizeinrichtung 40 entsprechend ausgestaltet.

Bei einem der Reflektoren 4111, 4112, 4113, 4114, insbesondere dem Bodenreflektor 4113, kann es sich um einen polierten Metallreflektor handeln. Dadurch kann der Reflektor 4111, 4112, 4113, 4114 möglichst dünn gestaltet werden.

Die Heizeinrichtung 40 für eine Blasmaschine 1 kann auch ein Heizelement 4110 zur Abstrahlung von Heizstrahlung zum Heizen von Vorformlingen 3, 3A, 3B, und einen Reflektor 4111 zur Reflexion von von dem Heizelement abgestrahlter Heizstrahlung in Richtung der Vorformlinge umfassen, wobei der Reflektor 4111 eine flexibel veränderbare Form hat. Hierbei kann der Reflektor der Gegenreflektor 4111 sein, der gegenüber dem Heizelement 4110 angeordnet ist, oder der Reflektor kann aus einem flexiblen Material gefertigt sein.

Die Heizeinrichtung 40 für eine Blasmaschine 1 kann auch ein Heizelement 4110 zur Abstrahlung von Heizstrahlung zum Heizen von Vorformlingen 3, 3A, 3B, und mindestens einen Reflektor 4111, 4112, 4113 zur Reflexion von von dem Heizelement abgestrahlter Heizstrahlung in Richtung der Vorformlinge 3, 3A, 3B umfassen, wobei zumindest ein Reflektor 4111, 4112, 4113 Segmente aufweist, welche relativ zu dem Heizelement oder den Vorformlingen einzeln verstellbar sind. Hierbei kann der Reflektor der Gegenreflektor 4111 sein, der gegenüber dem Heizelement 4110 angeordnet ist, oder ein Rückenreflektor 4112 sein, der auf der Seite des Heizelements angeordnet ist, oder ein Bodenreflektor 4113 sein, der quer zum Gegenreflektor 4111 oder dem Rückenreflektor 4112 bewegbar ist. -

Die Segmente jedes der Reflektoren 4111, 4112, 4113 können in Richtung der ersten Transportrichtung TR1 der Vorformlinge 3, 3A, 3B oder quer dazu angeordnet sein.

## Patentansprüche

1. Heizeinrichtung (40) für eine Blasmaschine (1), mit
mindestens einem Heizelement (4110) zur Abstrahlung von Heizstrahlung zum Heizen von Vorformlingen (3; 3A; 3B), wobei das mindestens eine Heizelement (4110) und Reflektoren (4111, 4112, 4113), die zur Reflexion von von dem mindestens einen Heizelement (4110) abgestrahlter Heizstrahlung in Richtung der Vorformlinge (3; 3A; 3B) dienen, Begrenzungen einer Heizgasse der Heizeinrichtung (40) bilden,
einer Bestimmungseinrichtung (60, 70; 60, 70, 80; 60, 70, 90; 60, 70, 80, 90) zur Bestimmung der Geometrie eines von der Heizeinrichtung (40) zu heizenden Vorformlings (3; 3A; 3B), und
einer Einstelleinrichtung (50) zur Einstellung einer Stellung des mindestens einen Heizelements (4110) und/oder mindestens eines der Reflektoren (4111, 4112, 4113) in Abhängigkeit von der Bestimmung der Bestimmungseinrichtung (60, 70; 60, 70, 80; 60, 70, 90; 60, 70, 80, 90),
wobei die Heizeinrichtung (40) derart ausgestaltet ist, dass eine Verstellung mindestens zweier Begrenzungen ihrer Heizgasse über eine gemeinsame Antriebseinrichtung (54; 55; 56) oder zwei Antriebseinrichtungen (54; 55; 56) automatisch erfolgt.

2. Heizeinrichtung nach Anspruch 1,
wobei die Bestimmungseinrichtung (60, 70; 60, 70, 80; 60, 70, 90; 60, 70, 80, 90) eine Speichereinrichtung (70) umfasst, in welcher eine vorbestimmte Stellung (L_{A} + BM, L_{B} + BM) eines Bodenreflektors (4113) in Abhängigkeit von der Länge (L_{A}, L_{B}) eines von der Heizeinrichtung (40) zu heizenden Vorformlings (3; 3A; 3B) und/oder die Geometrie eines von der Heizeinrichtung (40) zu heizenden Vorformlings (3; 3A; 3B) gespeichert ist, und/oder
wobei die Bestimmungseinrichtung (60, 70; 60, 70, 80; 60, 70, 90; 60, 70, 80, 90) eine Bodenreflektor-Erfassungseinrichtung (80) zur Erfassung der Stellung des Bodenreflektors (4113) und/oder eine Vorformlinglänge-Erfassungseinrichtung (90) zur Erfassung der Länge (L_{A}, L_{B}) der in der Heizeinrichtung (40) vorhandenen Vorformlinge (3; 3A; 3B) umfasst, um die Geometrie eines von der Heizeinrichtung (40) zu heizenden Vorformlings (3; 3A; 3B) zu bestimmen.

3. Heizeinrichtung nach Anspruch 1 oder 2, wobei die Einstellung des mindestens einen Heizelements (4110) über eine optische Erkennung der Geometrie eines Vorformlings (3; 3A; 3B) bestimmbar ist.

4. Heizeinrichtung nach Anspruch 2 oder 3, wobei die Bodenreflektor-Erfassungseinrichtung (80) und/oder die Vorformlinglänge-Erfassungseinrichtung (90), in Transportrichtung (TR1) der Vorformlinge (3; 3A; 3B) gesehen, am Einlauf der Heizeinrichtung (40) und/oder vor der Heizeinrichtung (40) angeordnet sind/ist.

5. Heizeinrichtung nach einem der vorangehenden Ansprüchen,
wobei das mindestens eine Heizelement (4110) während des Betriebs auf Basis einer Temperaturmessung des Vorformlings (3; 3A; 3B) an mehreren Punkten in der Heizeinrichtung (40) verstellbar ist, und/oder
wobei ein Regelkreis für eine Temperaturregelung zum Anwenden eines optimalen Heizprofils auf die Vorformlinge (3; 3A; 3B)vorgesehen ist.

6. Heizeinrichtung nach einem der vorangehenden Ansprüche, wobei die Heizeinrichtung (40) eine Vielzahl von Heizelementen (4110), die jeweils benachbart zueinander und in Richtung der Länge der Vorformlinge (3; 3A; 3B) nebeneinander angeordnet sind, zur Abstrahlung von Heizstrahlung zum Heizen der Vorformlinge (3; 3A; 3B) umfasst, und wobei die Anzahl der Vielzahl von Heizelementen (4110), welche zum Heizen der Vorformlinge (3; 3A; 3B) verwendet werden, mittels einer Steuereinrichtung (60) auf der Grundlage des Bestimmungsergebnisses der Bestimmungseinrichtung (60, 70; 60, 70, 80; 60, 70, 90; 60, 70, 80, 90) anpassbar ist.

7. Heizeinrichtung nach einem der vorangehenden Ansprüche,
wobei der Bodenreflektor (4113) quer zu dem Gegenreflektor (4111) angeordnet ist, und/oder
wobei der Bodenreflektor (4113) an seiner den Vorformlingen (3; 3A; 3B) zugewandten Seite eine Ausbuchtung (4116) hat, welche der Form der Vorformlinge (3; 3A; 3B) entspricht.

8. Heizeinrichtung nach Anspruch 7,
zudem mit einem Rückenreflektor (4112), welcher auf der Seite des Heizelements (4110) angeordnet ist, zur Reflexion von von nicht von den Vorformlingen (3; 3A; 3B) aufgenommener Heizstrahlung wieder zum Vorformling (3; 3A; 3B) und/oder den davor und dahinter angeordneten Vorformlingen (3; 3A; 3B),
wobei der Gegenreflektor (4111) und/oder der Rückenreflektor (4112) relativ zum Bodenreflektor (4113) und/oder zum Vorformling (3; 3A; 3B) bewegbar sind/ist, und/oder
wobei der Rückenreflektor (4112) und/oder der Gegenreflektor (4111) in Segmente unterteilt sind/ist.

9. Heizeinrichtung nach Anspruch 7 oder 8, wobei der Bodenreflektor (4113) in den Gegenreflektor (4111) und/oder einen Rückenreflektor (4112) einfahrbar ist, welcher auf der Seite des Heizelements (4110) angeordnet ist, oder wobei der Gegenreflektor (4111) flexibel ausgestaltet ist.

10. Heizeinrichtung nach Ansprch 8 oder 9, wobei die Einstelleinrichtung (50) zur stufenlosen Einstellung und/oder Feineinstellung des Bodenreflektors (4113) ausgestaltet ist und/oder der Gegenreflektor (4111) und/oder der Rückenreflektor (4112) mit einer Antriebseinrichtung (55; 56) stufenlos verstellbar sind/ist.

11. Heizeinrichtung nach einem der Ansprüche 7 bis 10, wobei die Einstelleinrichtung (50) zur Einstellung der Stellung (L_{A} + BM, L_{B} + BM) des Bodenreflektors (4113) eine elektrische oder pneumatische oder elektromechanische Antriebseinrichtung (54) umfasst.

12. Heizeinrichtung nach einem der Ansprüche 7 bis 11, zudem mit
zwei Heizstrecken (41, 42), die zueinander parallel und in Transportrichtung (TR1, TR2) der Vorformlinge (3; 3A; 3B) hintereinander angeordnet sind,
wobei jede Heizstrecke (41, 42) mindestens einen Bodenreflektor (4113, 4213) aufweist, und
wobei die Einstelleinrichtung (50) zur gemeinsamen Einstellung der vorbestimmten Stellung aller Bodenreflektoren (4113, 4213) der zwei Heizstrecken (41, 42) ausgestaltet ist.

13. Blasmaschine zum Herstellen von Behältern (2), zur Aufnahme eines Produkts, aus Vorformlingen (3; 3A; 3B), mit
einer Heizeinrichtung (40) nach einem der vorangehenden Ansprüche.

14. Heizverfahren für eine Blasmaschine (1), bei welchem mindestens ein Heizelement (4110) zur Abstrahlung von Heizstrahlung zum Heizen von Vorformlingen (3; 3A; 3B) vorgesehen ist, und wobei das mindestens eine Heizelement (4110) und Reflektoren (4111, 4112, 4113), die zur Reflexion von von dem mindestens einen Heizelement (4110) abgestrahlter Heizstrahlung in Richtung der Vorformlinge (3; 3A; 3B) dienen, Begrenzungen einer Heizgasse der Heizeinrichtung (40) bilden, mit den Schritten:
Bestimmen, mit einer Bestimmungseinrichtung (60, 70; 60, 70, 80; 60, 70, 90; 60, 70, 80, 90) einer Heizeinrichtung (40) für die Blasmaschine (1), der Geometrie eines von der Heizeinrichtung (40) zu heizenden Vorformlings (3; 3A; 3B),
Einstellen, mit einer Einstelleinrichtung (50), einer Stellung des mindestens einen Heizelements (4110) und/oder mindestens eines der Reflektoren (4111, 4113) in Abhängigkeit von der Bestimmung der Bestimmungseinrichtung (60, 70; 60, 70, 80; 60, 70, 90; 60, 70, 80, 90), wobei eine Verstellung mindestens zweier Begrenzungen der Heizgasse über eine gemeinsame Antriebseinrichtung (54; 55; 56) oder zwei Antriebseinrichtungen (54; 55; 56) erfolgt, und
Heizen von Vorformlingen (3; 3A; 3B) mit der von dem mindestens einen Heizelement (4110) abgestrahlten Heizstrahlung.

## Claims

1. Heating device (40) for a blow molding machine (1), the heating device (40) comprising
at least one heating element (4110) for radiating heat radiation for heating of preforms (3; 3A; 3B), wherein the at least one heating element (4110) and reflectors (4111, 4112, 4113) form limitations of a heating channel of the heating device (40), and wherein the reflectors (4111, 4112, 4113) serve for reflecting heat radiation, radiated by the at least one heating element (4110), into the direction of the preforms (3; 3A; 3B),
a determining device (60, 70; 60, 70, 80; 60, 70, 90; 60, 70, 80, 90) for determining the geometry of a preform (3; 3A; 3B) which is to be heated by the heating device (40), and
a setting device (50) for setting a position of the at least one heating element (4110) and/or of the at least one of the reflectors (4111, 4112, 4113) dependent on the determination of the determining device (60, 70; 60, 70, 80; 60, 70, 90; 60, 70, 80, 90),
wherein the heating device (40) is configured such that setting of at least two limitations of its heating channel is performed automatically by a common driving device 54;55;56) or two driving devices (54; 55; 56).

2. Heating device (40) according to claim 1,
wherein the determining device (60, 70; 60, 70, 80; 60, 70, 90; 60, 70, 80, 90) comprises a storing device (70) in which is stored a predetermined position (L_{A} + BM, L_{B} + BM) of a bottom reflector (4113) dependent on the length (L_{A}, L_{B}) of a preform (3; 3A; 3B) to be heated by the heating device (40) and/or the geometry of a preform (3; 3A; 3B) to be heated by the heating device (40), and/or
wherein the determining device (60, 70; 60, 70, 80; 60, 70, 90; 60, 70, 80, 90) comprises a bottom reflector detecting device (80) for detecting the position of the bottom reflector (4113) and/or a preform length detecting device (90) for detecting the length (L_{A}, L_{B}) of the preforms (3; 3A; 3B) present in the heating device (40), to determine the geometry of a preform (3; 3A; 3B) to be heated by the heating device (40).

3. Heating device (40) according to claim 1 or 2, wherein setting of the at least one heating element (4110) is determinable via an optical detection of the geometry of a preform (3; 3A; 3B).

4. The heating device according to claim 2 or 3, wherein the bottom reflector detecting device (80) and/or the preform length detecting device (90) is/are arranged, as is seen in the transport direction (TR1) of the preforms (3; 3A; 3B), at the intake of the heating device (40) and/or ahead of the heating device (40).

5. The heating device according to one of the preceding claims,
wherein the at least one heating element (4110) is displaceable during the operation on the basis of a temperature measurement of the preform (3; 3A; 3B) performed at plural points in the heating device (40), and/or
wherein a closed loop control is provided for a temperature control for applying an optimal heating profile to the preforms (3; 3A; 3B).

6. The heating device according to one of the preceding claims, wherein the heating device (40) comprises a plurality of heating elements (4110) each being arranged adjacent to each other and side by side in direction of the length of the preforms (3; 3A; 3B) and being for radiating heat radiation for heating the preforms (3; 3A; 3B), and wherein the number of the plurality of heating elements (4110) used for heating the preforms (3; 3A; 3B), is adaptable by a control device (60) on the basis of the determining result of the determining device (60, 70; 60, 70, 80; 60, 70, 90; 60, 70, 80, 90).

7. The heating device according to one of the preceding claims,
wherein the bottom reflector (4113) is arranged transverse to the counter reflector (4111), and/or
wherein the bottom reflector (4113) has a cavity (4116) on its side which is faced to the preforms (3; 3A; 3B), wherein the cavity (4116) corresponds to the form of the preforms (3; 3A; 3B).

8. The heating device according to claim 7,
further comprising a back reflector (4112) which is arranged on the side of the heating element (4110) and being for reflection of heat radiation, which is not absorbed by the preforms (3; 3A; 3B), again back to the preform (3; 3A; 3B) and/or the preforms arranged in front of or behind the preform,
wherein the counter reflector (4111) and/or the back reflector (4112) are movable relative to the bottom reflector (4113) or the preform (3; 3A; 3B), and/or
wherein the back reflector (4112) and/or the counter reflector (4111) are divided into segments.

9. The heating device according to claim 7 or 8, wherein the bottom reflector (4113) can be inserted into the counter reflector (4111) and/or a back reflector (4112) arranged on the side of the heating element (4110), or wherein the counter reflector (4111) is configured flexible.

10. The heating device according to claim 8 or 9, wherein the setting device (50) is configured for continuously setting and/or finely setting of the bottom reflector (4113), and/or the counter reflector (4111) and/or the back reflector (4112) can be continuously settable by the driving device (55; 56).

11. The heating device according to one of claims 7 to 10, wherein the setting device (50) comprises an electric or pneumatic or electromechanical driving device (54) for setting the position (L_{A} + BM, L_{B} + BM) of the bottom reflector (4113).

12. The heating device according to one of claims 7 to 11, further comprising
two heating paths (41, 42) arranged in parallel to each other and behind one another in the transport direction (TR1, TR2) of the preforms (3; 3A; 3B),
wherein each heating path (41, 42) comprises at least one bottom reflector (4113, 4213), and
wherein the setting device (50) is configured for jointly setting the predetermined position of all of the bottom reflectors (4113, 4213) of the two heating paths (41, 42).

13. Blow molding machine for producing containers (2) being for acceptance of a product and being formed from preforms (3; 3A; 3B), the blow molding machine comprising
a heating device (40) according to one of the preceding claims.

14. A heating method for a blow molding machine (1), according to which method at least one heating element (4110) is provided for radiating heat radiation for heating of preforms (3; 3A; 3B), and wherein the at least one heating element (4110) and reflectors (4111, 4112, 4113) form limitations of a heating channel of the heating device (40), and wherein the reflectors (4111, 4112, 4113) serve for reflecting heat radiation, radiated by the at least one heating element (4110), into the direction of the preforms (3; 3A; 3B), the heating method comprising the steps of:
determining, by a determining device (60, 70; 60, 70, 80; 60, 70, 90; 60, 70, 80, 90) of a heating device (40) for the blow molding machine (1), the geometry of a preform (3; 3A; 3B) which is to be heated by the heating device (40),
setting, by a setting device (50), a position of the at least one heating element (4110) and/or of the at least one of the reflectors (4111, 4112, 4113) dependent on the determination of the determining device (60, 70; 60, 70, 80; 60, 70, 90; 60, 70, 80, 90), wherein setting of at least two limitations of the heating channel is performed by a common driving device 54;55;56) or two driving devices (54; 55; 56), and
heating preforms (3; 3A; 3B) by the heat radiation radiated by the at least one heating element (4110).

## Revendications

1. Dispositif chauffant (40) pour une machine de moulage par soufflage (1), le dispositif chauffant (40) comprenant:
au moins un élément chauffant (4110) pour rayonner un rayonnement de chaleur pour chauffer des préformes (3; 3A; 3B), dans lequel l'au moins un élément chauffant (4110) et des réflecteurs (4111, 4112, 4113), étant destiné à réfléchir un rayonnement de chaleur, rayonné par l'élément chauffant (4110) dans un sens des préformes (3; 3A; 3B), forment des limitations d'un canal chauffant du dispositif chauffant (40),
un dispositif de détermination (60, 70; 60, 70, 80; 60, 70, 90; 60, 70, 80, 90) pour déterminer le géométrie d'une préforme (3 ; 3A ; 3B) à chauffer par le dispositif chauffant (40), et
un dispositif de réglage (50) pour régler la position d'au moins un élément chauffant (4110), et/ou d'au moins un des réflecteurs (4111, 4112, 4113) en fonction du détermination du détermination du dispositif de détermination (60, 70 ; 60, 70 80 ; 60, 70, 90 ; 60, 70, 80, 90),
dans lequel le dispositif chauffant (40) est configuré de sorte qu'une déplacement d'au moins deux limitations de son canal est automatiquement effectué par un dispositif d'entraînement (54; 55; 56) commun ou deux dispositifs d'entraînement (54; 55; 56).

2. Dispositif chauffant selon la revendication 1,
dans lequel le dispositif de détermination (60, 70; 60, 70, 80; 60, 70, 90 ; 60, 70, 80, 90) comprend un dispositif de stockage (70) dans lequel est stockée une position prédéterminée (L_{A} + BM, L_{B} + BM) du réflecteur de fond (4113) en fonction de la longueur (L_{A}, L_{B}) d'une préforme (3; 3A ; 3B) à chauffer par le dispositif chauffant (40) et/ou le géométrie d'une préforme (3; 3A; 3B) à chauffer par le dispositif chauffant, et/ou
dans lequel le dispositif de détermination (60, 70; 60, 70, 80; 60, 70, 90; 60, 70, 80, 90) comprend un dispositif de détection de réflecteur de fond (80) pour détecter la position du réflecteur de fond (4113), et/ou un dispositif de détection de longueur de préforme (90) pour détecter le longueur (L_{A},L_{B}) des préforme présentes dans le dispositif chauffant (40) pour déterminer le géométrie d'une préforme (3; 3A; 3B) à chauffer par le dispositif chauffant.

3. Dispositif chauffant selon la revendication 1 ou 2, dans lequel le réglage d'au moins un élément chauffant (4110) est déterminable par la détection optique du géométrie d'une préforme (3; 3A; 3B).

4. Dispositif chauffant selon la revendication 2 ou 3, dans lequel le dispositif de détection de réflecteur de fond (80) et/ou le dispositif de détection de longueur de préforme (90) est/sont agencés, en vue dans le sens de transport (TR1) des préformes (3; 3A; 3B), à l'admission du dispositif chauffant (40) et/ou à l'avant du dispositif chauffant (40).

5. Dispositif chauffant selon l'une des revendications précédentes,
dans lequel l'au moins un élément chauffant (4410) est réglable pendant le fonctionnement en base d'une détection de température des préformes (3; 3A; 3B) dans plusieurs spot du positif chauffant (40) et/ou
dans lequel un boucle d'asservissement pour la régulation de la température est destiné pour appliquer un profilé chauffant sur les préformes (3; 3A; 3B).

6. Dispositif chauffant selon l'une des revendications précédentes, dans lequel le dispositif chauffant (40) comprend une pluralité d'éléments chauffants (4110) agencés adjacents l'un à l'autre et côte à côte dans le sens de la longueur des préformes (3; 3A; 3B) et étant destinés à rayonner un rayonnement de chaleur pour chauffer les préformes (3; 3A; 3B), et dans lequel le nombre de la pluralité d'éléments chauffants (4110) utilisés pour chauffer les préformes (3; 3A; 3B) est adaptable par un dispositif de commande (60) sur la base du résultat de détermination du dispositif de détermination (60, 70 ; 60, 70, 80 ; 60, 70, 90 ; 60, 70, 80, 90).

7. Dispositif chauffant selon l'une des revendications précédentes,
dans lequel le réflecteur de fond (4113) est agencé transversalement au contre-réflecteur (4111), et/ou
dans lequel le réflecteur de fond (4113) comporte une cavité (4116) sur son côté faisant face aux préformes (3; 3A; 3B), dans lequel la cavité (4116) correspond à la forme des préformes (3; 3A; 3B).

8. Dispositif chauffant selon la revendication 7,
comprenant en outre un rétro-réflecteur (4112), étant agencé sur le côté de l'élément chauffant (4110) et étant destiné à réfléchir un rayonnement de chaleur qui n'est pas absorbé par les préformes (3; 3A; 3B), de retour vers la préforme (3; 3A; 3B) et/ou les préformes agencées devant ou derrière la préforme,
dans lequel le contre-réflecteur (4111) et/ou le rétro-réflecteur (4112) peut être déplacé par rapport au réflecteur de fond (4113) et/ou la préforme (3; 3A; 3B), et/ou
dans lequel le rétro-réflecteur (4112) et/ou le contre-réflecteur (4111) sont subdivisés dans segments.

9. Dispositif chauffant selon la revendication 7 ou 8, dans lequel le réflecteur de fond (4113) peut être inséré dans le contre-réflecteur (4111) et/ou un rétro-réflecteur (4112) agencé sur le côté de l'élément chauffant (4110), ou dans lequel le contre-réflecteur (4111) est configuré pour être flexible.

10. Dispositif chauffant selon la revendication 8 ou 9, dans lequel le dispositif de réglage (50) est configuré pour un réglage continu et/ou un réglage fin du réflecteur de fond (4113), et/ou le contre-réflecteur (4111) et/ou le rétro-réflecteur (4112) peuvent être continuellement réglables par le dispositif d'entraînement (55; 56).

11. Dispositif chauffant selon l'une des revendications 7 à 10, dans lequel le dispositif de réglage (50) comprend un dispositif d'entraînement électrique, pneumatique ou électromécanique (54) pour régler la position (L_{A} + BM, L_{B} + BM) du réflecteur de fond (4113).

12. Dispositif chauffant selon l'une des revendications 7 à 11, comprenant en outre:
deux voies chauffantes (41, 42) agencées parallèlement l'une à l'autre et l'une derrière l'autre dans le sens de transport (TR1, TR2) des préformes (3; 3A; 3B),
dans lequel chaque voie chauffante (41, 42) comprend au moins un réflecteur de fond (4113, 4213), et
dans lequel le dispositif de réglage (50) est configuré pour régler conjointement la position prédéterminée de tous les réflecteurs de fond (4113, 4213) des deux voies chauffantes (41, 42).

13. Machine de moulage par soufflage pour produire des contenants (2) destinés à accepter un produit et étant constitués de préformes (3; 3A; 3B), la machine de moulage par soufflage comprenant:
un dispositif chauffant (40) selon l'une des revendications précédentes.

14. Procédé chauffant pour une machine de moulage par soufflage (1), selon lequel procédé au moins un élément chauffant (4110) est destiné pour rayonner un rayonnement de chaleur pour chauffer des préformes (3; 3A; 3B), et dans lequel au moins un élément chauffant (4110) et des réflecteurs (4111, 4112, 4113), étant destiné à réfléchir un rayonnement de chaleur, rayonné par l'élément chauffant (4110) dans un sens des préformes (3; 3A; 3B), forment des limitations d'un canal chauffant (40) du dispositif chauffant (40), le procédé chauffant comprenant les étapes de :
le détermination, par un dispositif de détermination (60, 70; 60, 70, 80; 60, 70, 90; 60, 70, 80, 90) d'un dispositif chauffant (40) pour le machine de moulage par soufflage (1), du géométrie d'une préforme (3; 3A; 3B) à chauffer par le dispositif chauffant (40),
le réglage, par un dispositif de réglage (50), de la position d'au moins un élément chauffant (4110) et/ou d'au moins un réflecteur (4111, 4113) en fonction de la détermination du dispositif de détermination (60, 70; 60, 70, 80; 60, 70, 90; 60, 70, 80, 90), dans lequel un réglage d'au moins deux limitations est effectué par un dispositifs entraînement (54; 55; 56) commun ou deux dispositifs d'entraînement (54; 55; 56), et
le chauffage des préformes (3; 3A; 3B) avec le rayonnement de chaleur rayonné par l'au moins d'un élément chauffant (4110).
